# EUROPEAN PATENT APPLICATION

(11) **EP 4 773 704 A1**
(43) Date of publication of application: **08.07.2026**
(21) Application number: 24860283.1
(22) Date of filing: 20.08.2024
(51) Int. Cl.: H04W 72/232, H04W 72/0446, H04W 84/06

(54) **METHOD, USER EQUIPMENT, PROCESSING DEVICE, AND STORAGE MEDIUM FOR RECEIVING DOWNLINK SIGNAL, AND METHOD, BASE STATION, PROCESSING DEVICE, AND STORAGE MEDIUM FOR TRANSMITTING DOWNLINK SIGNAL**

(30) Priority: 01.09.2023 KR 20230116454
(71) Applicant: Hyundai Mobis Co., Ltd., Gangnam-gu Seoul 06141 (KR)
(72) Inventor: KIM, Tae Hyoung, Cheonan-si, Chungcheongnam-do 31168 (KR)
(74) Representative: Jung, Minkyu
(86) International application number: PCT/KR2024/012342
(87) International publication number: WO 2025/048362

(57) **Abstract**

This UE receives downlink control information (DCI) on the basis of a default mode set as the default from among a TN mode, in which transmission and reception of a signal based on a TN cell are performed and an NTN mode, in which transmission and reception of a signal based on an NTN cell are performed, on a first frequency band supporting a TN and an NTN, and can switch, on the basis of indication information indicating switching of the mode in the DCI, to a non-default mode, which is not set as the default from among the NTN mode and the TN mode.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. To satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

Recently, support for wireless communication services through non-terrestrial networks (NTNs) has been considered to provide wireless communication services in places in which terrestrial connections are technically very difficult or expensive to provide wireless communication services through terrestrial networks.

### DISCLOSURE

### Technical Problem

A method is required to accurately and efficiently provide wireless communication signals to user equipments (UEs) via airborne platforms or space.

A method for efficient coexistence of terrestrial networks and non-terrestrial networks (NTNs) is required.

The objects to be achieved with the present disclosure are not limited to what has been particularly described hereinabove and other objects not described herein will be more clearly understood by persons skilled in the art from the following detailed description.

### Technical Solution

According to an aspect, a method of receiving a downlink signal by a user equipment (UE) in a wireless communication system includes connecting with a terrestrial network (TN) cell and a non-terrestrial network (NTN) cell on a first frequency band, receiving downlink control information (DCI) based on a default mode configured as a default among a TN mode in which transmission and reception of a signal based on the TN cell are performed and an NTN mode in which transmission and reception of a signal based on the NTN cell are performed, and switching to a non-default mode that is not configured as a default among the NTN mode and the TN mode based on instruction information instructing switching of a mode in the DCI and receiving the signal based on the non-default mode.

The default mode may be configured to the TN mode and the non-default mode is configured to the NTN mode.

Reception of the signal based on the non-default mode may be performed after a specific time gap from a first slot in which a message including an acknowledgement (ACK) for the DCI is transmitted or a second slot in which the DCI is received.

The reception of the signal based on the non-default mode may be performed after the specific time gap from the first slot based on the DCI not including data scheduling information.

The reception of the signal based on the non-default mode may be performed after the specific time gap from the second slot based on the DCI including data scheduling information.

The specific gap may include a first time gap applied when switching from the TN mode to the NTN mode and a second time gap applied when switching from the NTN mode to the TN mode.

The non-default mode may be activated until expiration of a preset timer, and the UE may fall back to the default mode based on the expiration of the preset timer.

The preset timer may be reset or initialized based on reception of DCI including data scheduling information in the non-default mode.

The non-default mode may be activated during a mode activation time included in the DCI, and the UE may fall back to the default mode when the mode activation time elapses.

The UE may fall back to the default mode based on reception of the DCI including an inactivity indicator or a mode termination indicator in the non-default mode.

According to another aspect, a user equipment (UE) for receiving a downlink signal in a wireless communication system includes at least one transceiver, at least one processor, and at least one computer memory operably connectable to the at least one processor and storing instructions that, when executed, cause the at least one processor to perform operations, wherein the operations include connecting with a terrestrial network (TN) cell and a non-terrestrial network (NTN) cell on a first frequency band, receiving downlink control information (DCI) based on a default mode configured as a default among a TN mode in which transmission and reception of a signal based on the TN cell are performed and an NTN mode in which transmission and reception of a signal based on the NTN cell are performed, and switching to a non-default mode that is not configured as a default among the NTN mode and the TN mode based on instruction information instructing switching of a mode in the DCI and receiving the signal based on the non-default mode.

According to another aspect, a method of transmitting a downlink signal to a user equipment (UE) connected to a terrestrial network (TN) cell and a non-terrestrial network (NTN) cell on a first frequency band by a base station (BS) in a wireless communication system includes instructing the UE to select one mode as a default mode among a TN mode in which transmission and reception of a signal based on the TN cell are performed and an NTN mode in which transmission and reception of a signal based on the NTN cell are performed, and transmitting downlink control information (DCI) including instruction information indicating switching from the default mode to a non-default mode that is not configured as a default among the NTN mode and the TN mode.

The foregoing solutions are merely a part of the examples of the present disclosure and various examples into which the technical features of the present disclosure are incorporated may be derived and understood by persons skilled in the art from the following detailed description.

### Advantageous Effects

According to some implementations of various embodiments, wireless communication signals may be efficiently transmitted/received via airborne platforms or space. Accordingly, the overall throughput of a wireless communication system may be increased.

According to some implementations of various embodiments, the continuity of wireless communication services may be ensured, the reliability of wireless communication services may be strengthened through connectivity between various access technologies, and network resilience and reliability against disasters may be improved.

According to some implementations of various embodiments, coexistence of non-terrestrial networks (NTNs) and terrestrial networks (NTs) may be supported.

According to some implementations of various embodiments, a user equipment (UE) may effectively detect a synchronization signal block (SSB) even when coexisting on NTN and TN frequency bands.

The effects according to various embodiments are not limited to what has been particularly described hereinabove and other effects not described herein will be more clearly understood by persons skilled in the art related to the present disclosure from the following detailed description.

### BRIEF DESCRIPTION OF THE DRAWINGS

The drawings attached to this specification are intended to provide understanding of the present disclosure, illustrate various embodiments of the present disclosure, and together with the description of the specification serve to explain the principles of the present disclosure.
FIG. 1 illustrates an example of a communication system 1 to which implementations of the present disclosure are applied.
FIG. 2 is a block diagram illustrating examples of communication devices capable of performing a method according to the present disclosure.
FIG. 3 illustrates an example of a frame structure used in a 3GPP-based wireless communication system.
FIG. 4 illustrates a resource grid of a slot.
FIG. 5 illustrates a multi-beam operation in a 3GPP-based system.
FIG. 6 illustrates an example of in which SS/PBCH blocks (SSBs) are transmitted on a cell.
FIG. 7 illustrates a non-terrestrial network (NTN) structure.
FIG. 8 illustrates a synchronous raster and a channel raster used in some implementations.
FIG. 9 illustrates an SSB structure.
FIG. 10 is a diagram showing a signal flow for a PDCCH transmission and reception process.
FIG. 11 illustrates a situation in which a terrestrial network (TN) and a non-terrestrial network (NTN) coexist.
FIG. 12 is a diagram illustrating a method for a UE to receive data or a signal from a TN cell or an NTN cell.
FIG. 13 and FIG. 14 are diagrams for explaining a method for a UE to switch modes based on received downlink control information.
FIGS. 15 and 16 illustrate a method of performing mode switching based on the NTI included in DCI.
FIGS. 17 to 19 are diagrams for explaining a method of performing a fallback operation between a TN mode and an NTN mode by a UE.
FIG. 20 is a diagram for explaining a method of receiving a downlink signal by a UE.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems.

For convenience of description, description will be given based on 3rd generation partnership project (3GPP)-based communication system. However, the technical features of the present disclosure are not limited thereto. For example, although the following detailed description is given based on 3GPP LTE or 5G technology, some implementations of the present disclosure are applicable to other arbitrary mobile communication systems and systems to be introduced in the future (e.g., 6G) except for matters that are specific to the 3GPP LTE/5G.

For terms and techniques that are not described in detail among terms and techniques used in the present disclosure, reference may be made to 3GPP based standard specifications, for example, 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS and 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, 3GPP TS 38.331 etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), gNB, base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. At least one antenna is installed per node. An antenna may refer to a physical antenna port or refer to a virtual antenna or an antenna group. The node may also be called a point.

A 3GPP-based communication system uses the concept of a cell in order to manage radio resources, and a cell related with the radio resources is distinguished from a cell of a geographic area. The "cell" of the geographic area may be understood as coverage within which a node may provide services using a carrier, and the "cell" of the radio resources is related with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be related with coverage of the "cell" of radio resources used by the node. Accordingly, the term "cell" may be used to indicate service coverage by the node sometimes, radio resources at other times, or a range that a signal using the radio resources may reach with valid strength at other times.

The "cell" related with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. In this case, the carrier frequency may be equal to or different from a center frequency of each cell or CC.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical downlink control channel (PDCCH), etc. are defined as the DL physical channels, and a reference signal (RS) and a synchronization signal (SS) are defined as the DL physical signals. The RS, which is also referred to as a pilot, represents a signal with a predefined special waveform known to both the BS and the UE. For example, a demodulation reference signal (DMRS), a channel state information RS (CSI-RS), etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, the PDCCH refers to a set of time-frequency resources (e.g., resource elements (REs)) that is a set of REs that carry downlink control information (DCI), and the PDSCH refers to a set of time-frequency resources that is a set of REs that carry DL data. The PUCCH, PUSCH, and PRACH refer to a set of time-frequency resources that is a set of time-frequency REs that carry uplink control information (UCI), UL data, and random access preambles, respectively. In the following description, the meaning of "The UE/BS transmits/receives the PUCCH/PUSCH/PRACH" is that the UE/BS transmits/receives the UCI/UL data/random access preambles on or through the PUCCH/PUSCH/PRACH, respectively. In addition, the meaning of "the BS/UE transmits/receives the PBCH/PDCCH/PDSCH" is that the BS/UE transmits/receives the broadcast information/DCI/DL data on or through a PBCH/PDCCH/PDSCH, respectively.

In the present disclosure, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a physical channel and/or a physical signal in the form of radio signals on a cell, the communication device may not select and receive radio signals including only a specific physical channel or a specific physical signal through a radio frequency (RF) receiver or select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

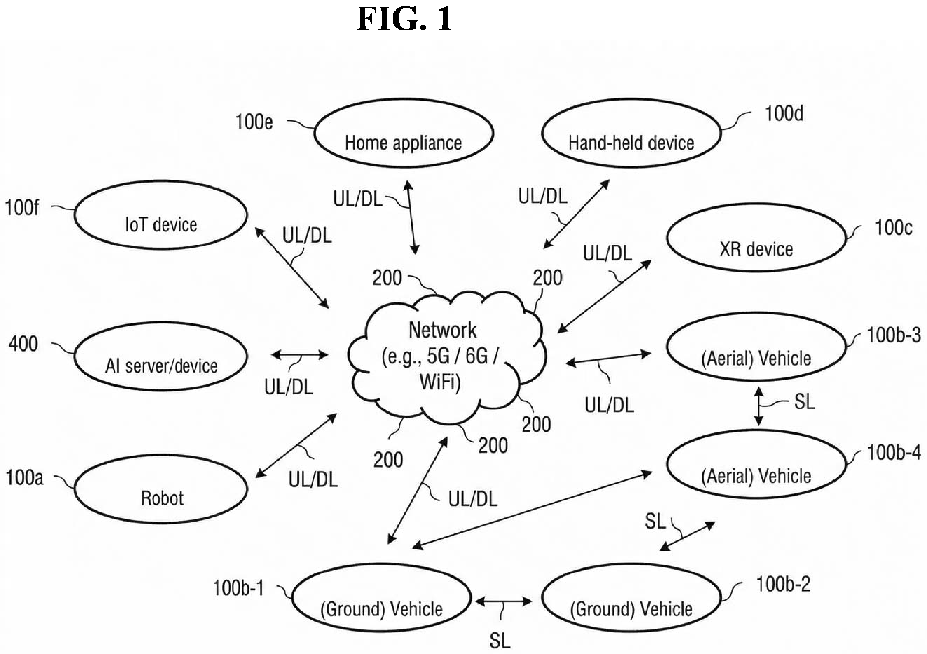

FIG. 1 illustrates an example of a communication system 1 to which implementations of the present disclosure are applied.

Referring to FIG. 1, the communication system 1 applied to the present disclosure includes wireless devices, BSs, and a network. Here, the wireless devices represent devices performing communication using wireless access technologies (e.g., 5G NR (New RAT), LTE (e.g., E-UTRA), WiFi, or 6G to be introduced in the future).

The wireless devices may include, without being limited to, a robot 100a, vehicles 100b-1, 100b-2, 100b-3, and 100b-4, an extended reality (XR) device 100c, a hand-held device 100d, a home appliance 100e, an Internet of Things (IoT) device 100f, and an artificial intelligence (AI) device/server 400. For example, the vehicles may include a ground vehicle having a wireless communication function, an autonomous driving vehicle, and a vehicle capable of performing vehicle-to-vehicle communication. Here, the vehicles may include an unmanned aerial vehicle (UAV) (e.g., a drone) and urban air mobility (UAM) (e.g., unmanned aerial vehicle). The XR device may include an augmented reality (AR)/virtual reality (VR)/mixed reality (MR) device. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device may operate as a BS/network node with respect to another wireless device.

The wireless devices 100a to 100f may be connected to a network via BSs 200. Artificial intelligence (AI) technology may be applied to the wireless devices 100a to 100f and the wireless devices 100a to 100f may be connected to the AI server 400 via the network. Although the wireless devices 100a to 100f may communicate with each other through the BSs 200/network, the wireless devices 100a to 100f may perform direct communication (e.g., sidelink communication) with each other without passing through the BSs/network. For example, the vehicles 100b-1, 100b-2, 100b-3, and 100b-4 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connection may be established between the wireless devices 100a to 100f and the BSs 200 and between the wireless devices 100a to 100f. Here, the wireless communication/connection such as UL/DL communication and sidelink (SL) communication (or, device-to-device (D2D) communication) may be established by various wireless access technology (e.g., 5G NR). The wireless devices and the BSs/wireless devices may transmit/receive radio signals to/from each other through the wireless communication/connection (UL/DL, SL). To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

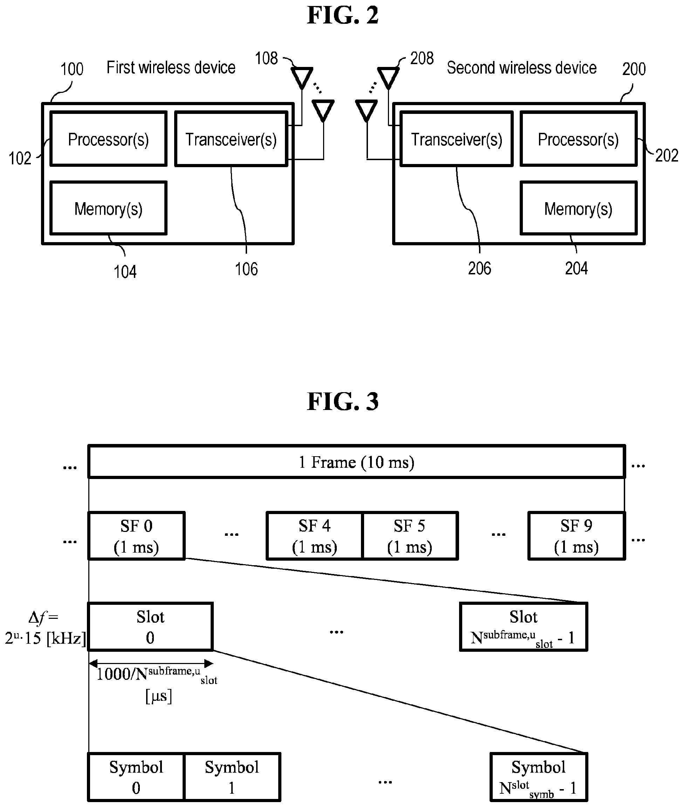

FIG. 2 is a block diagram illustrating examples of communication devices capable of performing a method according to the present disclosure. Referring to FIG. 2, a first wireless device 100 and a second wireless device 200 may transmit and/or receive radio signals through a variety of wireless access technologies. Here, {the first wireless device 100 and the second wireless device 200} may correspond to {the wireless device 100x and the BS 200} and/or {the wireless device 100x and the wireless device 100x} of FIG. 1.

The first wireless device 100 and the second wireless device 200 may include one or more processors 102 and 202 and one or more memories 104 and 204 and additionally further include one or more transceivers 106 and 206 and/or one or more antennas 108 and 208, respectively. The processors 102 and 202 may control the memories 104 and 204 and/or the transceivers 106 and 206 and may be configured to implement the after-described/proposed functions, procedures, and/or methods. For example, the processors 102 and 202 may process information within the memories 104 and 204 to generate first information/signals and then transmit radio signals including the first information/signals through the transceivers 106 and 206. The processors 102 and 202 may receive radio signals including second information/signals through the transceivers 106 and 206 and then store information obtained by processing the second information/signals in the memories 104 and 204. The memories 104 and 204 may be connected to the processors 102 and 202 and may store a variety of information related to operations of the processors 102 and 202. For example, the memories 104 and 204 may perform a part or all of processes controlled by the processors 102 and 202 or store software code including instructions for performing the after-described/proposed procedures and/or methods. Here, the processors 102 and 202 and the memories 104 and 204 may be a part of a communication modem/circuit/chip designed to implement wireless access technology. The transceivers 106 and 206 may be connected to the processors 102 and 202 and transmit and/or receive radio signals through one or more antennas 108. Each of the transceivers 106 and 206 may include a transmitter and/or a receiver.

One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit/receive user data, control information, and/or radio signals/channels, mentioned in the methods and/or operational flowcharts of the present disclosure, to/from one or more other devices. In addition, the one or more processors 102 and 202 may perform control so that the one or more transceivers 106 and 206 may transmit/receive user data, control information, or radio signals to/from one or more other devices. The one or more transceivers 106 and 206 may be connected to the one or more antennas 108 and 208. The one or more transceivers 106 and 206 may be configured to transmit and/and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels, etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

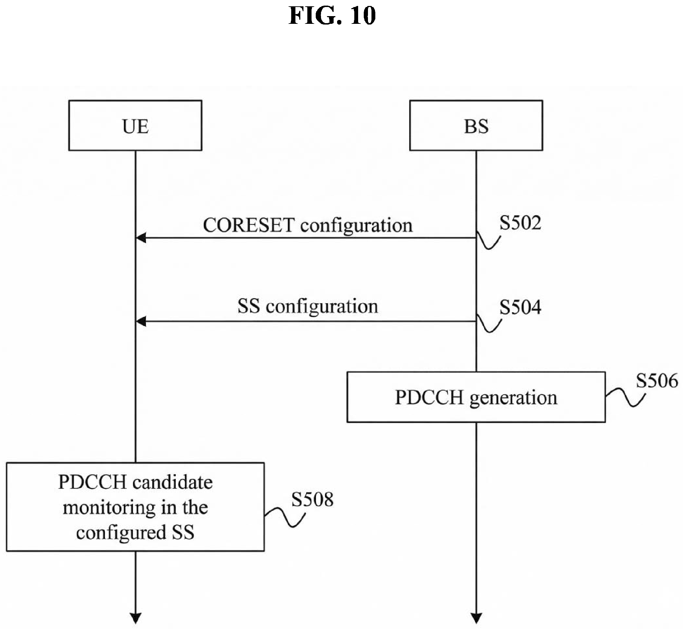

According to an example, the first wireless device 100 or a UE may include the processor 102 and the memory 104 connected to the RF transceiver 106. The memory 104 may include at least one program for performing operations related to embodiments described with reference to FIGS. 10 to 15 to be described below. In detail, the operations include an operation of attempting to detect a synchronization block (SSB) on a specific frequency band supporting a terrestrial network (TN) and a non-terrestrial network (NTN), and performing an initial access procedure based on the detected SSB, and in this case, the attempt to detect the SSB may be preferentially performed on a network cell having a higher priority among the TN cell and the NTN cell based on priorities set for the TN cell and the NTN cell.

In the present disclosure, at least one memory 104 and 204 may store instructions or programs which, when executed, cause at least one processor 102 and 202 operably coupled to the at least one memory to perform operations according to some embodiments or implementations of the present disclosure.

In the present disclosure, a computer-readable (non-transitory) storage medium may store at least one instruction or computer program which, when executed by at least one processor, causes the at least one processor to perform operations according to some embodiments or implementations of the present disclosure.

FIG. 3 illustrates an example of a frame structure used in a 3GPP-based wireless communication system.

The frame structure of FIG. 3 is purely exemplary and the number of subframes, the number of slots, and the number of symbols, in a frame, may be variously changed. In some wireless communication systems, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 3, UL and DL transmissions are organized into frames. Each frame has a duration of T_{f} = (Δfₘₐₓ*N_{f}/100)*T_{c} = 10 ms, and here, a basic time unit is T_{c} = 1/(Δfₘₐₓ*N_{f}), Δfₘₐₓ = 480*10³ Hz, and N_{f}=4096. For reference, a sampling time is Tₛ = 1/(Δf_{ref}*N_{f,ref}), Δf_{ref} = 15*10³ Hz, and N_{f,ref}=2048. T_{c} and T_{f} has a relationship of a constant κ = T_{c}/T_{f} = 64. A frame includes 10 subframes, and a duration T_{sf} of a single subframe is 1 ms. Subframes are further divided into slots and the number of slots in a subframe depends on a subcarrier spacing. Each slot may include *N*^{slot}_{symb} symbols based on a cyclic prefix (CP). For example, in some scenarios, in a normal CP, each slot includes 14 OFDM symbols, and in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframes according to subcarrier spacing △f = 2^{u}*15 kHz for a normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The table below shows the number of OFDM symbols per slot, the number of slots per frame, and the number of slots per subframe, according to the subcarrier spacing △f = 2^{u}*15 kHz.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ ∈ {0, ..., n^{subframe,u}ₛₗₒₜ - 1} and indexed within a frame in ascending order as follows: n^{u}_{s,f} ∈ {0, ..., n^{frame,u}ₛₗₒₜ - 1}.

Hereinafter, implementations of the present disclosure are described by referring to the minimum unit of time for scheduling uplink, downlink, and sidelink transmissions as a slot, but depending on a wireless communication system, the minimum unit of time for scheduling may be referred to by a different term. For example, in an LTE-based system, the minimum unit of time for scheduling transmissions is called a subframe or transmission time interval (TTI), whereas in an NR-based system, the minimum unit of time for scheduling is called a slot.

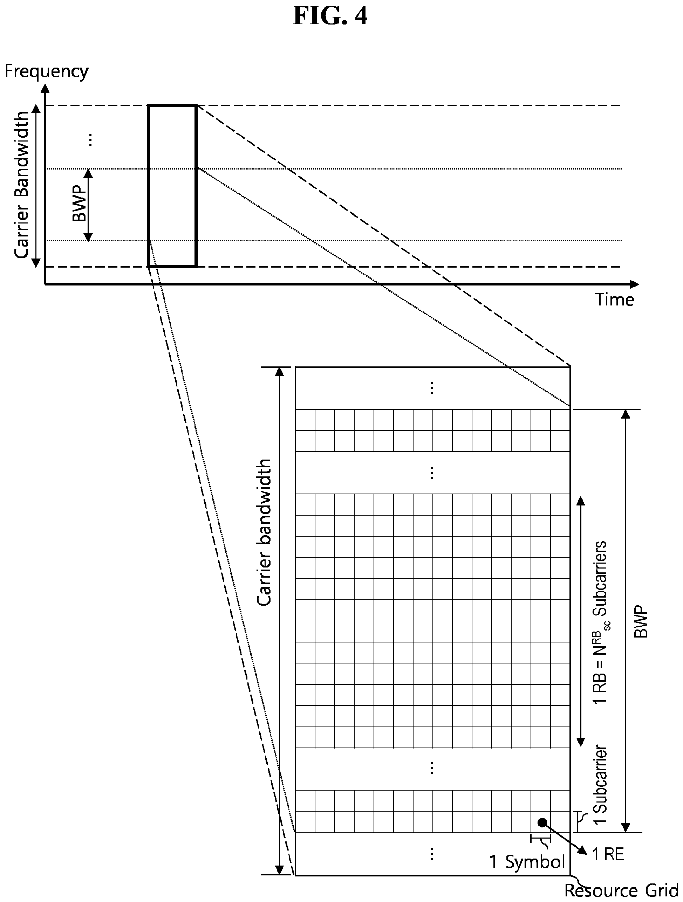

FIG. 4 illustrates a resource grid of a slot. The slot includes multiple (e.g., *N*^{slot}_{symb}) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) *N*^{start,u}_{grid} indicated by higher layer signaling (e.g., radio resource control (RRC) signaling). Here, *N*^{size,u}_{grid,x} is the number of resource blocks (RBs) in the resource grid and the subscript x is DL for downlink and UL for uplink. *N*^{RB}_{sc} is the number of subcarriers per RB, and in the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration *u* is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index / representing a symbol location relative to a reference point in the time domain. RBs are classified into CRBs and physical resource blocks (PRBs). The CRBs are numbered from 0 upwards in the frequency domain for the subcarrier spacing configuration *u.* The center of subcarrier 0 of CRB 0 for the subcarrier spacing configuration *u is* equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{start,u}_{BWP,i}, where *N*^{start,u}_{BWP,i} is a CRB in which the BWP starts relative to CRB 0. The BWP includes a plurality of contiguous RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the corresponding carrier.

In a 3GPP-based system, a control resource set (CORESET), which is a set of time-frequency resources for which a UE is capable of monitoring a PDCCH, may be defined and/or configured. One or more CORESETs may be configured for the UE. The CORESET has a time duration of one to three OFDM symbols and includes a set of physical resource blocks (PRBs). The PRBs and the CORESET duration that make up the CORESET may be provided to the UE through upper layer (e.g., RRC) signaling. Within the configured CORESET(s), a set of PDCCH candidates is monitored according to corresponding search space sets. In the present disclosure, monitoring implies decoding (so-called blind decoding) each PDCCH candidate according to the monitored DCI formats. A master information block (MIB) on the PBCH provides the UE with parameters (e.g., CORESET#0 configuration) for monitoring the PDCCH for scheduling the PDSCH carrying a system information block 1 (SIB1). The PBCH may also indicate that there is no associated SIB1, in which case the UE may be instructed on other frequencies to search for SSBs associated with SIB1, as well as a frequency range to assume that there are no SSBs associated with SSB1. CORESET#0, which is a CORESET for scheduling at least SIB1, may be configured via MIB or dedicated RRC signaling.

A set of PDCCH candidates monitored by the UE is defined in terms of PDCCH search space sets. The search space set may be a common search space (CSS) set or a UE-specific search space (USS) set. Each CORESET configuration is associated with one or more search space sets, and each search space set is associated with one CORESET configuration.

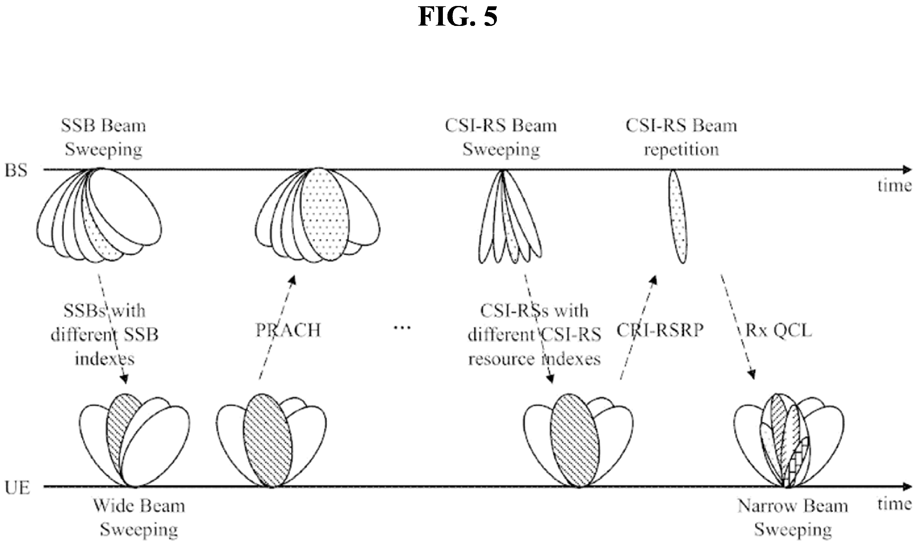

FIG. 5 illustrates a multi-beam operation in a 3GPP-based system.

5G and subsequent 3GPP-based systems may utilize a high ultra-high frequency band, such as a millimeter-frequency band equal to or greater than 6 GHz, to transmit data to multiple users while maintaining high a data rate by using a wide frequency band. However, the millimeter frequency band has frequency characteristics that cause very rapid signal attenuation over distance due to the use of an excessively high frequency band. Therefore, when a band of at least 6 GHz or higher is used, a 3GPP-based system uses a narrow beam transmission scheme that resolves a problem of coverage reduction due to rapid propagation attenuation by concentrating energy in a specific direction rather than omni-directionally and perform signal transmission to compensate for the rapid propagation attenuation characteristics. However, when a service is provided using only one narrow beam, a range in which one BS is capable of providing the service is narrowed, and thus the BS collects multiple narrow beams and provides a service by using a wide beam.

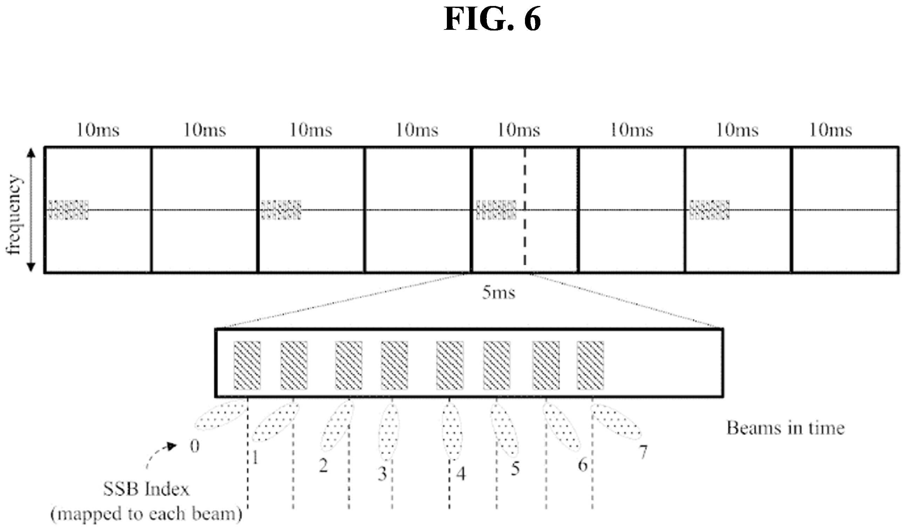

FIG. 6 illustrates an example of in which SS/PBCH blocks (SSBs) are transmitted on a cell.

In a 3GPP-based system, each SSB is associated with each beam. For example, during a half frame, different SSBs may be transmitted in different spatial directions (by using different beams that span a coverage area of a cell). Possible time positions of SSBs within a half frame are determined by a subcarrier spacing, and the periodicity of the half-frames in which SSBs are transmitted is configured by a network. Within a frequency span of a carrier, multiple SSBs may be transmitted. Different indices of SSBs transmitted/detected on a single cell may correspond to different BS (wide) Tx beams. In 3GPP-based systems, a multi-beam operation is based on beam switching/beam scanning, in which signals are transmitted/received while changing a beam direction over time. For example, assuming that the BS supports up to N transmission beams, beam sweeping may be performed to transmit a synchronous signal block (SSB) including PSS, SSS, and PBCH in each of the up to N beam directions (see SSB beam sweeping in FIG. 5). A set of SSBs within a beam-sweep is specifically called an SS burst set or an SS burst. The number of SSBs in the SS burst set represents the number of beams for the beam-sweep. Multiple SSB patterns are defined depending on a frequency band and a subcarrier spacing (SCS). In the present disclosure, the SSB pattern is also referred to as a SSB timing pattern. For a half-frame with SSBs, first (OFDM) symbol indices s for candidate SSBs may be determined according to the SCS of the SSBs as follows, where index 0 corresponds to a first symbol of a first slot in the half frame. In some scenarios, the SSB patterns according to the following table may be used.

**[Table 3]**

| SCS | OFDM symbol(s) | FR1 <= 3GHz | 3 GHz < FR1 <= 6 GHz | FR2 |
|---|---|---|---|---|
| Case A : 15 kHz SCS | {2, 8} + 14*n | n = 0, 1 | n = 0,1,2,3 | |
| | | s = 2, 8, 16, 22 | s = 2, 8, 16, 22, 30, 36, 44, 50 | |
| Case B : 30 kHz SCS | {4, 8, 16, 20} + 28*n | n=0 | n = 0, 1 | |
| | | s = 4, 8, 16, 20 | s = 4, 8, 16, 20, 32, 36, 44, 48 | |
| Case C : 30 kHz SCS | {2, 8} + 14*n | n = 0, 1 | n = 0, 1, 2, 3 | |
| | | s = 2, 8, 16, 22 | s = 2, 8, 16, 22, 30, 36, 44, 50 | |
| Case D : 120 kHz SCS | {4, 8, 16, 20} + 28*n | | | n = 0, 1, 2, 3, 5, 6, 7, 8, 10, 11, 12, 13, 15, 16, 17, 18 |
| | | | | s = 4, 8, 16, 20, 32, 36, 44, 48, 60, 64, 72, 76, 88, 92, 100, 104, 144, 148, 156, 160, 172, 176, 184, 188, 200, 204, 212, 216, 228, 232, 240, 244, 284, 288, 296, 300, 312, 316, 324, 328, 340, 344, 352, 356, 368, 372, 380, 384, 424, 428, 436, 440, 452, 456, 464, 468, 480, 484, 492, 496, 508, 512, 520, 524 |
| Case E : 240 kHz SCS | {8, 12, 16, 20, 32, 36, 40, 44} + 56*n | | | n = 0, 1, 2, 3, 5, 6, 7, 8 |
| | | | | s = 8, 12, 16, 20, 32, 36, 40, 44, 64, 68, 72, 76, 88, 92, 96, 100, 120, 124, 128, 132, 144, 148, 152, 156, 176, 180, 184, 188, 200, 204, 208, 212, 288, 292, 296, 230, 312, 316, 320, 324, 344, 348, 352, 356, 368, 372, 376, 380, 400, 404, 408, 412, 424, 428, 432, 436, 456, 460, 464, 468, 480, 484, 488, 492 |

In Table above, FR represents a frequency range, for example, FR1 may correspond to a frequency range of 410 MHz to 7,125 MHz, and FR2 may correspond to a frequency range of 24,250 MHz to 52,600 MHz. As seen from Table above, the number of SSBs within an SSB burst set may vary depending on a frequency range and an SCS. The number of candidate SSBs in a half frame may be indexed from 0 to L'ₘₐₓ-1 in ascending time order. If Lₘₐₓ is the maximum number of SSB indices within a cell or the maximum number of SSBs transmitted within a half frame, for operations without shared spectrum channel access, L'ₘₐₓ = Lₘₐₓ. For operations with shared spectrum channel access, L'ₘₐₓ and Lₘₐₓ may differ. For example, in the case of operations with shared spectrum channel access in FR1, for L'ₘₐₓ = 10 and SSBs of an SCS of 15 kHz and for L'ₘₐₓ = 20 and SSBs of an SSC of 30 kHz, Lₘₐₓ = 8 may be defined.

SSB(s) are transmitted periodically from 5 ms to 160 ms. A UE performing initial access to a network assumes 20 ms (e.g., 2 frames). In other words, for initial cell access, the UE may assume that a half frame with SSBs appears with a periodicity of two frames.

Referring back to FIG. 5, the UE may measure the power of SSB(s) received from BS transmission (Tx) beams by using a wide reception (Rx) beam and select a preferred beam of the UE. For example, the UE may select one SSB from among the detected/received SSBs. 3GPP-based systems specify a specific mapping between an SSB and a random access channel (RACH) occasion to allow the network to know which beam the UE has selected. The RACH occasion is a time and frequency resource available for transmission of the RACH preamble. Information about how many SSBs are to be mapped to one RACH occasion and how many preamble indices are to be mapped to a single SSB may be provided to the UE by the network. For example, when the network configures the number of SSBs per RACH occasion to 1/N, one SSB is associated with N RACH occasions (where N is a positive integer), and when the network configures the number of SSBs per RACH occasion to N, N preamble indices are mapped to a single SSB. The UE selects an SSB from among the SSBs detected/received by the UE on a cell, and selects the RACH occasion based on the selected SSB for transmission. The BS may detect which SSB among the SSBs transmitted on the cell the UE has selected by detecting the RACH occasion including the PRACH from the UE through BS Rx beam sweeping. The BS may determine a BS Tx beam for communication with the UE based on the SSB selected by the UE.

For finer beam tuning, CSI-RS may be transmitted. The BS may perform beam refinement by using CSI-RS transmissions in narrower beams around the BS Tx beam determined based on the RACH occasion at which the PRACH from the UE is detected (see CSI-RS beam sweeping in FIG. 5). The UE may measure the power of CSI-RSs received from the BS Tx narrow beams and report to the BS which of the BS Tx narrow beams the UE prefers. For example, the UE may measure CSI-RSs on CSI-RS resources to select at least one CSI-RS resource, and report a CSI-RS resource indicator (CRI) and a corresponding reference signal received power (RSRP) of the selected CSI-RS resource to the BS. The BS may determine a BS Tx narrow beam based on the CRI and/or corresponding RSRP reported by the UE, and repeatedly transmit the CSI-RS with the BS Tx narrow beam (see P3 CSI-RS beam sweeping in FIG. 5) such that the UE performs Rx beam sweeping to find an appropriate UE Rx beam. The UE may find the appropriate UE Rx beam by measuring the power of the CSI-RS received from each UE Rx beam.

The UE may detect beam failure by using CSI-RS/SSB. For example, when the L1-RSRP for a beam to be connected falls below a certain limit, the UE determines beam failure and searches for other candidate beams with good quality. If a predefined number of beam failures are detected, a beam failure recovery (BFR) procedure may be triggered with the candidate beam. The network may provide the UE with an identifier (ID) of an SSB transmitted by a cell, which is used to determine a candidate beam for BFR, and a preamble index used when performing the BRF to select the candidate beam identified by the SSB. The UE transmits a BRF request to a network by transmitting a PRACH associated with the SSB ID when a predetermined number of beam failures are detected, and the network provides a random access response (RAR) to the UE for the BRF request.

When receiving a PDSCH, the UE may assume that a DM-RS port of a PDSCH is quasi co-located (QCL) with the associated SSB in terms of Doppler shift, Doppler spread, average delay, delay spread, and spatial Rx parameters. A transmission configuration indicator (TCI) state may be configured/indicated for a PDCCH/PDSCH. The TCI state may include quasi co-location (QCL) information. For example, to decode a PDSCH based on a detected PDCCH with DCI for a given serving cell, the UE may be configured with M TCI-state configurations provided via upper layer parameters by the BS. Each TCI state includes parameters that configure a QCL relationship between one or two downlink reference signals (DL RSs) and DM-RS ports of a PDSCH, DM-RS ports of a PDCCH, or CSI-RS port(s) of a CSI-RS resource. The QCL relationship is configured by an upper layer parameter qcl-type1 for the first DL RS and an upper layer parameter qcl-type2 for the second DL RS (if configured). The QCL types corresponding to each DL RS are given by the upper-level parameter qcl-type in QCL-Info and may take one of the following values.
- 'typeA' : {Doppler shift, Doppler spread, average delay, delay spread}
- 'typeB' : {Doppler shift, Doppler spread}
- 'typeC' : {Doppler shift, average delay}
- 'typeD' : {Spatial Rx parameter}

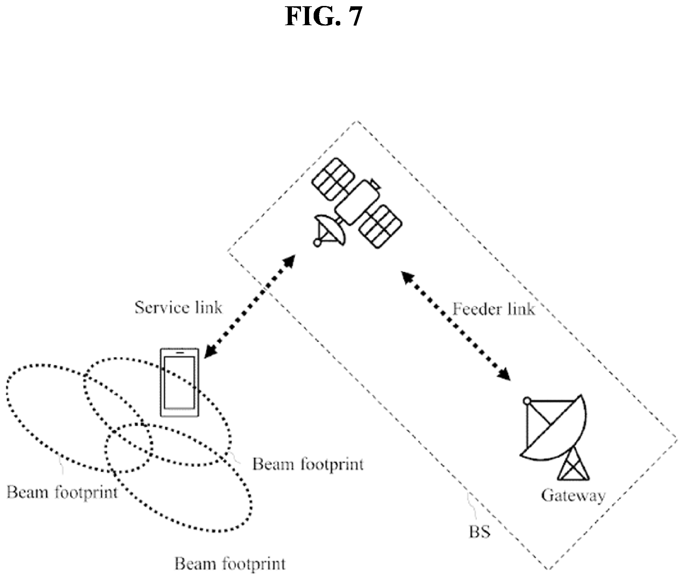

FIG. 7 illustrates a non-terrestrial network (NTN) structure.

Recently, discussions have been underway to enable 3GPP-based systems to support non-terrestrial networks (NTNs). The NTN is any network including non-ground flying objects. When wireless communication via the NTN becomes possible in 3GPP-based systems, the continuity of wireless communication services may be ensured, the reliability of wireless communication services may be strengthened through connectivity between various access technologies, and network resilience and reliability against disasters may be improved. For convenience of explanation, the following terms are used below.
- NTN: A radio access network including BSs that provides non-terrestrial radio access to UEs by using NTN payloads and NTN gateways mounted on airborne or space-borne NTN vehicles.
- NTN Gateway: An earth station located on the surface of the Earth that provides connectivity to NTN payloads by using feeder links. The NTN gateway is a transport network layer (TNL) node.
- NTN Payload: A network node mounted on a satellite or high altitude platform station that provides connectivity functions between service links and feeder links.
- Service Link: Wireless link between NTN payload and UE.
- Feeder link: A wireless link between the NTN gateway and the NTN payload.
- Satellite: A space-borne vehicle orbiting the Earth carrying an NTN payload.
- NTN cell: A cell that provides a service link between the UE and the NTN payload.

Referring to FIG. 7, the NTN gateway is connected to an NTN payload mounted on a satellite or high altitude platform system (HAPS) via a feeder link. The NTN payload is connected to the UE via a service link. The NTN gateway may be connected to a core network of a 3GPP-based system.

The NTN payload forwards a wireless protocol received from the UE (via the service link) to the NTN gateway (via the feeder link), and forwards a wireless protocol received from the NTN gateway (via the feeder link) to the UE (via the feeder link). The NTN gateway may serve multiple NTN payloads, and the NTN payload may be served by multiple NTN gateways. For the NTN, a tracking area may correspond to a fixed geographical area, and each mapping may be configured in a wireless access network.

The following three types of service links are supported:
- Earth-fixed service link: A service link that is provided by beam(s) that continuously cover the same geographical areas (e.g., in the case of GSO satellites).
- Quasi-Earth-fixed service link: A service link supplied by beam(s) that cover one geographical area for a limited period and another geographical area for another period (e.g., in the case of NGSOs that produce steerable beams).
- Earth-moving service link: A service link of which a coverage area is supplied by beam(s) that glide over the Earth surface (e.g., for NGSO satellites that produce fixed or non-steerable beams).

The NTN may include a satellite communication network, an air-to-ground network, and a UAV network. One of the key concepts in the NTN is that NTN cells are provided by non-geostationary orbit (NGSO) satellites that periodically orbit the Earth. Each satellite has its own orbit, which is included in satellite position estimate information. Based on the satellite position estimate information, a network may predict feeder link switchover and manage UE mobility and radio resource control. A BS providing NTN access may broadcast orbital trajectory information or ephemeris information regarding coordinates for the NTN payload. EphemerisInfo may provide satellite position estimate in the format of position and velocity state vectors or in the format of orbital parameters. Tables below illustrate EphemerisInfo information elements (IEs) broadcast by a BS and descriptions of fields of EphemerisInfo IEs.

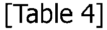

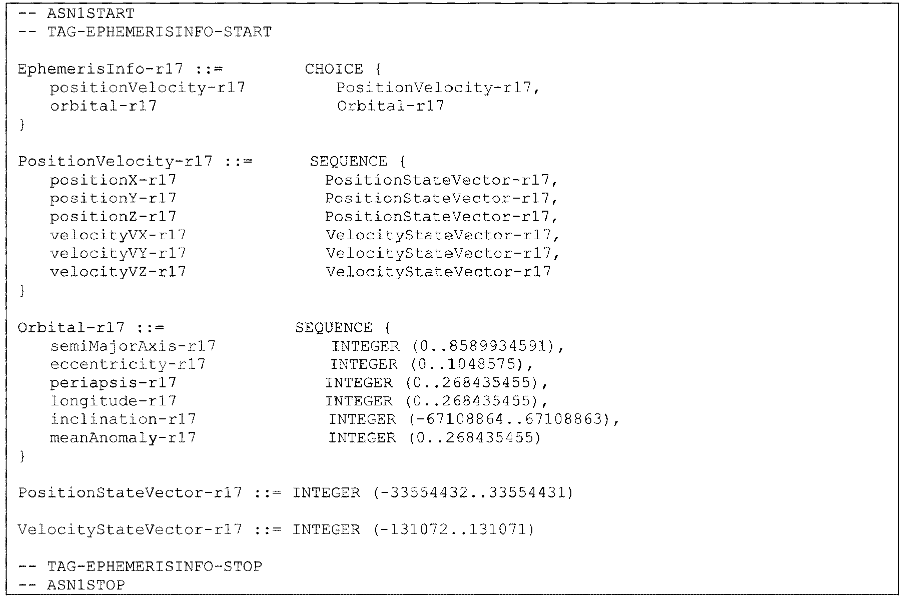

**[Table 5]**

| ***EphemerisInfo* field descriptions** |
|---|
| ***eccentricity*** |
| Satellite orbital parameter: eccentricity e, see NIMA TR 8350.2 [71]. Unit is radian. |
| Step of 1.431 * 10⁻⁸. Actual value = field value * (1.431 * 10⁻⁸). |
| ***inclination*** |
| Satellite orbital parameter: inclination i, see NIMA TR 8350.2 [71]. Unit is radian. |
| Step of 2.341* 10⁻⁸ rad. Actual value = field value * (2.341* 10⁻⁸). |
| ***longitude*** |
| Satellite orbital parameter: longitude of ascending node Ω, see NIMA TR 8350.2 [71]. Unit is radian. |
| Step of 2.341 * 10⁻⁸ rad. Actual value = field value * (2.341* 10⁻⁸). |
| ***meanAnomaly*** |
| Satellite orbital parameter: Mean anomaly M at epoch time, see NIMA TR 8350.2 [71]. Unit is radian. |
| Step of 2.341* 10⁻⁸ rad. Actual value = field value * (2.341* 10⁻⁸). |
| ***ZZperiapsis*** |
| Satellite orbital parameter: argument of periapsis ω, see NIMA TR 8350.2 [71]. Unit is radian. |
| Step of 2.341 * 10⁻⁸ rad. Actual value = field value * (2.341* 10⁻⁸). |
| ***positionX, positionY, positionZ*** |
| X, Y, Z coordinate of satellite position state vector in ECEF. Unit is meter. |
| Step of 1.3 m. Actual value = field value * 1.3. |
| ***semiMajorAxis*** |
| Satellite orbital parameter: semi major axis α, see NIMA TR 8350.2 [71]. Unit is meter. |
| Step of 4.249 * 10⁻³ m. Actual value = 6500000 + field value * (4.249 * 10⁻³). |
| ***velocityVX, velocityVY, velocityVZ*** |
| X, Y, Z coordinate of satellite velocity state vector in ECEF. Unit is meter/second. |
| Step of 0.06 m/s. Actual value = field value * 0.06. |

Satellite communication networks may include low Earth orbit (LEO) satellites, medium Earth orbit (MEO) satellites, and geosynchronous Earth orbit (GEO) satellites.

**[Table 6]**

| **Platforms** | **Altitude range** | **Orbit** | **Typical beam footprint size** |
|---|---|---|---|
| Low-Earth Orbit (LEO) | 300 - 1500 km | Circular around the earth | 100 - 1000 km |
| Medium-Earth Orbit (MEO) | 7000 - 25000 km | | 100 - 1000 km |
| Geostationary Earth Orbit (GEO) | 35786 km | National station keeping position fixed | 200 - 2500 km |

The following are examples of NTN deployment scenarios.

**[Table 7]**

| **Main attributes** | **Deployment-D1** | **Deployment-D2** | **Deployment-D3** | **Deployment-D4** | **Deployment-D5** |
|---|---|---|---|---|---|
| Platform orbit and altitude | GEO at 35 786 km | GEO at 35 786 km | Non-GEO down to 600 km | Non-GEO down to 600 km | UAS between 8 km and 50 km including HAPS |
| Carrier Frequency on the link between Air / space-borne platform and UE | Around 20 GHz for DL | Around 2 GHz for both DL and UL (S band) | Around 2 GHz for both DL and UL (S band) | Around 20 GHz for DL | Below and above 6 GHz |
| | Around 30 GHz for UL (Ka band) | | | Around 30 GHz for UL (Ka band) | |
| Beam pattern | Earth fixed beams | Earth fixed beams | Moving beams | Earth fixed beams | Earth fixed beams |

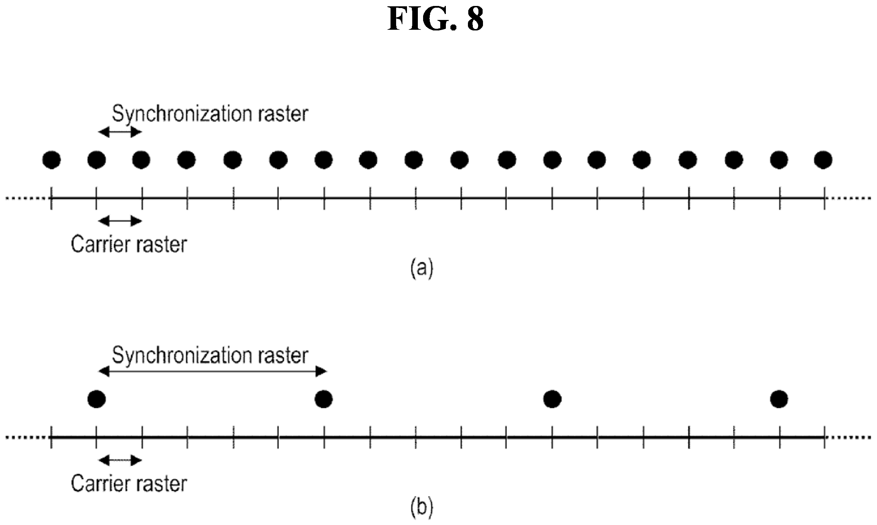

FIG. 8 illustrates a synchronous raster and a channel raster used in some implementations.

A UE attempting network access performs cell search, which is a process for the UE to obtain time and frequency synchronization with a cell and to detect a physical layer cell identity (PCI) of the cell. During cell search operations performed when powered on, the UE obtains necessary information required to access the cell by using an SSB. A UE performing cell search attempts to detect SSBs while moving through the frequency domain assuming a synchronization raster. The synchronization raster indicates possible frequency locations of SSBs to be used by the UE for obtaining system information when there is no explicit signaling of SSB locations. In LTE, the frequency domain location of PSS/SSS is always fixed around the carrier center frequency (see (a) of FIG. 8). In contrast, in NR, a set of possible frequency locations for an SSB is defined based on a frequency band, called the synchronization raster, and the UE needs to search for an SSB based on the synchronization raster. Unlike in LTE in which a UE searches for PSS/SSS at all carrier raster locations, in a UE in NR, a sparser synchronization raster is defined (see (b) of FIG. 8). Therefore, in NR, the UE needs to search for an SSB in a sparser synchronization raster than LTE. The carrier raster is also called a channel raster, and the channel raster represents possible carrier positions. The global frequency channel raster defines a set of radio frequency (RF) frequencies F_{REF}. The RF reference frequencies are used in signaling to identify the locations of RF channels, SSB blocks, and other elements. A global frequency raster is used to define all frequencies from 0 to 100 GHz. In NR, RF reference frequencies may be given by an NR absolute radio frequency channel number (NR-ARFCN) and the RF reference frequency F_{REF} in MHz may be given by the following equation: F_{REF} = F_{REF-Offs} + △F_{Global}(N_{REF} - N_{REF-Offs}), where △F_{Global} is the granularity of the frequency raster, N_{REF} is NR-ARFCN, and F_{REF-Offs} and N_{REF-Offs} may be given by Table below.

**[Table 8]**

| **Frequency range (MHz)** | **ΔF_{Global} (kHz)** | **F_{REF-Offs} (MHz)** | **N_{REF-Offs}** | **Range of N_{REF}** |
|---|---|---|---|---|
| 0 - 3000 | 5 | 0 | 0 | 0 - 599999 |
| 3000 - 24250 | 15 | 3000 | 600000 | 600000 - 2016666 |

A channel raster defines a subset of RF reference frequencies that are to be used to identify RF channel locations in uplink and downlink.

A global synchronization raster is defined for all frequencies, and the frequency location of an SSB is defined as SS_{REF} with a corresponding number global synchronization signal number (GSCN). Parameters defining the SS_{REF} and GSCN for all frequency ranges are defined, for example, in Table below.

**[Table 9]**

| **Frequency range** | **SS Block frequency position SS_{REF}** | **GSCN** | **Range of GSCN** |
|---|---|---|---|
| 0 - 3000 MHz | N * 1200kHz + M * 50 kHz, N=1:2499, M ∈ {1,3,5} (Note 1) | 3N + (M-3)/2 | 2 - 7498 |
| 3000 - 24250 MHz | 3000 MHz + N * 1.44 MHz N = 0:14756 | 7499 + N | 7499 - 22255 |
| NOTE 1: The default value for operating bands with which only support SCS spaced channel raster(s) is M=3. | | | |

A synchronization raster for each band may be given, for example, by Table below. A distance between applicable GSCN entries may be given by <Step size> indicated in Table below.

**[Table 10]**

| **NR operating band** | **SS Block SCS** | **SS Block pattern ^{NOTE 1}** | **Range of GSCN (First - <Step size> - Last)** |
|---|---|---|---|
| n1 | 15 kHz | Case A | 5279 - <1> - 5419 |
| n2 | 15 kHz | Case A | 4829 - <1> - 4969 |
| n3 | 15 kHz | Case A | 4517 - <1> - 4693 |
| n5 | 15 kHz | Case A | 2177 - <1> - 2230 |
| | 30 kHz | Case B | 2183 - <1> - 2224 |
| n7 | 15 kHz | Case A | 6554 - <1> - 6718 |
| n8 | 15 kHz | Case A | 2318 - < 1 > - 2395 |
| n12 | 15 kHz | Case A | 1828 - <1> - 1858 |
| n14 | 15 kHz | Case A | 1901 - <1> - 1915 |
| n18 | 15 kHz | Case A | 2156 - <1> - 2182 |
| n20 | 15 kHz | Case A | 1982 - <1> - 2047 |
| n25 | 15 kHz | Case A | 4829 - <1> - 4981 |
| n26 | 15 kHz | Case A | 2153 - <1> - 2230 |
| n28 | 15 kHz | Case A | 1901 - <1> - 2002 |
| n29 | 15 kHz | Case A | 1798 - <1> - 1813 |
| n30 | 15 kHz | Case A | 5879 - <1> - 5893 |
| n34 | 15 kHz | Case A | NOTE 5 |
| | 30 kHz | Case C | 5036 - <1> - 5050 |
| n38 | 15 kHz | Case A | NOTE 2 |
| | 30 kHz | Case C | 6437 - <1> - 6538 |
| n39 | 15 kHz | Case A | NOTE 6 |
| | 30 kHz | Case C | 4712 - <1> - 4789 |
| n40 | 30 kHz | Case C | 5762 - <1> - 5989 |
| n41 | 15 kHz | Case A | 6246 - <3> - 6717 |
| | 30 kHz | Case C | 6252 - <3> - 6714 |
| n46^{NOTE 3} | 30 kHz | Case C | 8993 - <1> - 9530 |
| n48 | 30 kHz | Case C | 7884 - <1> - 7982 |
| n50 | 30 kHz | Case C | 3590 - <1> - 3781 |
| n51 | 15 kHz | Case A | 3572 - <1> - 3574 |
| n53 | 15 kHz | Case A | 6215 - <1> - 6232 |
| n65 | 15 kHz | Case A | 5279 - <1> - 5494 |
| n66 | 15 kHz | Case A | 5279 - <1> - 5494 |
| | 30 kHz | Case B | 5285 - <1> - 5488 |
| n70 | 15 kHz | Case A | 4993 - <1> - 5044 |
| n71 | 15 kHz | Case A | 1547 - <1> - 1624 |
| n74 | 15 kHz | Case A | 3692 - <1> - 3790 |
| n75 | 15 kHz | Case A | 3584 - <1> - 3787 |
| n76 | 15 kHz | Case A | 3572 - <1> - 3574 |
| n77 | 30 kHz | Case C | 7711 - <1> - 8329 |
| n78 | 30 kHz | Case C | 7711 - <1> - 8051 |
| n79 | 30 kHz | Case C | 8480 - <16> - 8880 |
| n90 | 15 kHz | Case A | 6246 - <1> - 6717 |
| | 30 kHz | Case C | 6252 - <1> - 6714 |
| n91 | 15 kHz | Case A | 3572 - <1> - 3574 |
| n92 | 15 kHz | Case A | 3584 - <1> - 3787 |
| n93 | 15 kHz | Case A | 3572 - <1> - 3574 |
| n94 | 15 kHz | Case A | 3584 - <1> - 3787 |
| n96^{NOTE 4} | 30 kHz | Case C | 9531 - <1> - 10363 |

The notes shown in Table 10 may be explained by Table below.

**[Table 11]**

| | |
|---|---|
| NOTE 1: | SSB pattern is defined in clause in 3GPP TS 38.213. |
| NOTE 2: | The applicable SS raster entries are GSCN = {6432, 6443, 6457, 6468, 6479, 6493, 6507, 6518, 6532, 6543}. |
| NOTE 3: | The following GSCN are allowed for operation in band n46: GSCN = {8996, 9010, 9024, 9038, 9051, 9065, 9079, 9093, 9107, 9121, 9218, 9232, 9246, 9260, 9274, 9288, 9301, 9315, 9329, 9343, 9357, 9371, 9385, 9402, 9416, 9430, 9444, 9458, 9472, 9485, 9499, 9513}. |
| NOTE 4: | The following GSCN are allowed for operation in band n96: GSCN = {9548, 9562, 9576, 9590, 9603, 9617,9631, 9645, 9659, 9673, 9687, 9701, 9714, 9728, 9742, 9756, 9770, 9784, 9798, 9812, 9826, 9840, 9853, 9867, 9881, 9895, 9909, 9923, 9937, 9951, 9964, 9978, 9992, 10006, 10020, 10034, 10048, 10062, 10076, 10090, 10103, 10117, 10131, 10145, 10159, 10173, 10187, 10201, 10214, 10228, 10242, 10256, 10270, 10284, 10298, 10312, 10325, 10339, 10353}. |
| NOTE 5: | The applicable SS raster entries are GSCN = {5032, 5043, 5054} |
| NOTE 6: | The applicable SS raster entries are GSCN = {4707, 4715, 4718, 4729, 4732, 4743, 4747, 4754, 4761, 4768, 4772, 4782, 4786, 4793} |

Referring to Table 9 and Table 10, for n35, the UE may perform cell search by incrementing GSCN by 1 starting from GSCN = 6125.

Cell selection is performed based on cell defining SSBs (CD-SSBs) in which a synchronization raster is located. When an SSB is associated with remaining minimum system information (RMSI) (e.g., SIB1), for example, when the MIB carried by the PBCH in the SSB includes parameters for transmission of a PDCCH that schedules the RMSI, the SSB is called a CD-SSB. The UE may search for frequency bands, identify the strongest cell based on an SSB for each carrier frequency, and select the cell to perform initial access.

### SSB related operation

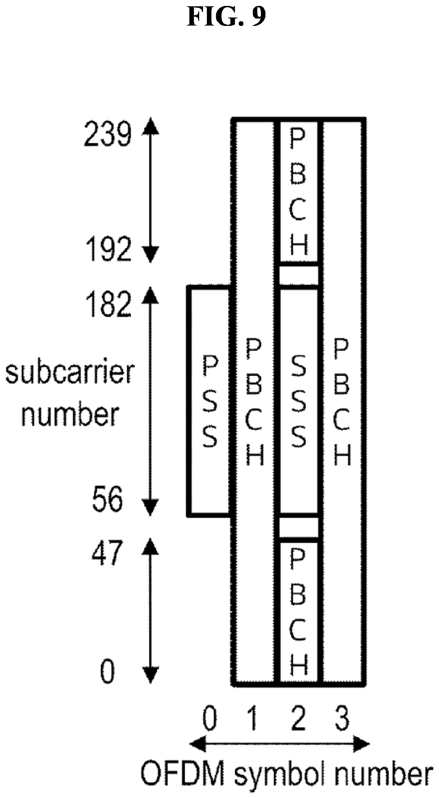

FIG. 9 illustrates an SSB structure. A UE may perform cell search, system information obtaining, beam alignment for initial access, DL measurement, and the like based on an SSB. The SSB is used interchangeably with a synchronization signal/physical broadcast channel (SS/PBCH) block.

Referring to FIG. 9, an SSB includes PSS, SSS, and PBCH. The SSB includes four consecutive OFDM symbols, and PSS, PBCH, SSS/PBCH, and PBCH are transmitted for each OFDM symbol. The PSS and the SSS each include 1 OFDM symbol and 127 subcarriers, and the PBCH includes 3 OFDM symbols and 576 subcarriers. Polar coding and quadrature phase shift keying (QPSK) are applied to the PBCH. The PBCH includes data RE and demodulation reference signal (DMRS) RE for each OFDM symbol. There are three DMRS REs per RB and three data REs between the DMRS REs.

Cell search refers to a process by which a UE obtains time/frequency synchronization of a cell and detects a cell identifier (ID) of the cell (e.g., physical layer Cell ID or PCID). The PSS is used to detect a cell ID within a cell ID group, and the SSS is used to detect a cell ID group. The PBCH is used to detect an SSB (time) index and detect a half frame.

The cell search process of the UE may be summarized as shown in Table 12 below.

**[Table 12]**

| | Signal type | Operations |
|---|---|---|
| 1^{st} step | PSS | * Obtain SS/PBCH block (SSB) symbol timing |
| | | * Detect cell ID within cell group ID (3 hypothesis) |
| 2^{nd} Step | SSS | * Detect cell group ID (336 hypothesis) |
| 3^{rd} Step | PBCH DMRS | * SSB index and Half frame (HF) index(Slot and frame boundary detection) |
| 4^{th} Step | PBCH | * Time information (80 ms, System Frame Number (SFN), SSB Index, HF)* Minimum Remaining System Information (RMSI) Control Resource Set (CORESET)/Search Space Configuration |
| 5^{th} Step | PDCCH and PDSCH | * Cell access information* RACH configuration |

There are 336 cell ID groups and 3 cell IDs for each cell ID group. There are a total of 1008 cell IDs. Information about a cell ID group to which a cell ID of a cell belongs is provided/obtained through an SSS of the cell, and information about a cell ID among 336 cells within the cell ID is provided/obtained through a PSS.

FIG. 10 is a diagram showing a signal flow for a PDCCH transmission and reception process.

Referring to FIG. 10, a BS may transmit a control resource set (CORESET) configuration to a UE (S502). A CORSET is defined as a set of resource element groups (REGs) with a given numerology (e.g., SCS, or CP length). The REG is defined as one OFDM symbol by one (P)RB. Multiple CORESETs for a single UE may overlap each other in the time/frequency domain. The CORSET may be configured by system information (e.g., master information block (MIB)) or higher layer signaling (e.g., radio resource control (RRC) signaling). For example, configuration information for a specific common CORSET (e.g., CORESET #0) may be transmitted in an MIB. For example, a PDSCH carrying system information block 1 (SIB1) may be scheduled by a specific PDCCH, and CORSET #0 may be used to carry the specific PDCCH. Configuration information for CORESET #N (e.g., N>0) may be transmitted by RRC signaling (e.g., cell common RRC signaling or UE specific RRC signaling). For example, the UE-specific RRC signaling carrying CORSET configuration information may include various forms of signaling, such as an RRC configuration message, an RRC reconfiguration message, and/or BWP configuration information. In detail, the CORSET configuration may include the following information/fields.
- controlResourceSetId: represents an ID of the CORESET.
- frequencyDomainResources: represents frequency resources of the CORESET. The frequency resources of the CORESET are represented as a bitmap in which each bit corresponds to an RBG (e.g., six (consecutive) RBs). For example, the most significant bit (MSB) of the bitmap corresponds to a first RBG. RBGs corresponding to bits configured to 1 are allocated as frequency resources of the CORESET.
- duration: represents time resources of the CORESET. The duration represents the number of consecutive OFDM symbols contained in the CORESET. The duration has a value between 1 and 3.
- cce-REG-MappingType: represents a control channel element (CCE)-REG mapping type. Interleaved and non-interleaved types are supported.
- interleaverSize: represents an interleaver size.
- pdcch-DMRS-ScramblingID: represents a value used for PDCCH DMRS initialization. When pdcch-DMRS-ScramblingID is not included, a physical cell ID of a serving cell is used.
- precoderGranularity: represents precoder granularity in the frequency domain.
- reg-BundleSize: represents an REG bundle size.
- tci-PresentInDCI: represents whether DL-related DCI includes a transmission configuration index (TCI) field.
- tci-StatesPDCCH-ToAddList: represents a subset of TCI states configured in pdcch-Config used to provide a quasi-co-location (QCL) relationship between DL RS(s) of a RS set (TCI-State) and PDCCH DMRS ports.

The BS may transmit a PDCCH search space (SS) configuration to the UE (S504). The PDCCH SS configuration may be transmitted by higher layer signaling (e.g., RRC signaling). For example, RRC signaling may include, but is not limited to, various signaling such as an RRC setup message, an RRC reconfiguration message, and/or BWP configuration information. While the CORESET configuration and PDCCH SS configuration are illustrated in FIG. 1, in FIG. 5, the CORESET configuration and PDCCH SS configuration are separately signaled for convenience of explanation, and the present disclosure is not limited thereto. For example, the CORESET configuration and the PDCCH SS configuration may be transmitted in one message (e.g., by one RRC signaling) or separately in different messages.

The PDCCH SS configuration may include information about a configuration of a PDCCH SS set. The PDCCH SS set may be defined as a set of PDCCH candidates monitored (e.g., blindly detected) by the UE. One or more SS sets may be configured for the UE. Each SS set may be either a USS set or a CSS set. For convenience, the PDCCH SS set may be referred to as "SS" or "PDCCH SS".

The PDCCH SS set includes PDCCH candidates. The PDCCH candidates are the CCE(s) that the UE monitors to receive/detect the PDCCH. Monitoring includes blind decoding (BD) of PDCCH candidates. One PDCCH (candidate) includes 1, 2, 4, 8 or 16 CCEs depending on an aggregation level (AL). One CCE includes six REGs. Each CORESET configuration is associated with one or more SSs, and each SS is associated with one CORESET configuration. One SS is defined based on one SS configuration, and the SS configuration may contain the following information/fields.
- searchSpaceId: represents an ID of an SS.
- controlResourceSetId: represents a CORESET associated with an SS.
- monitoringSlotPeriodicityAndOffset: represents the periodicity (slot) and offset (slot) for PDCCH monitoring.
- monitoringSymbolsWithinSlot: represents first OFDM symbol(s) for PDCCH monitoring in a slot configured by PDCCH monitoring. First OFDM symbol(s) for PDCCH monitoring is represented as a bitmap with each bit corresponding to an OFDM symbol of the slot. The MSB of the bitmap corresponds to the first OFDM symbol of the slot. The OFDM symbol(s) corresponding to the bit(s) configured to 1 corresponds to the first symbol(s) of the CORESET in the slot.
- nrofCandidates: represents the number of PDCCH candidates for each AL where AL={1, 2, 4, 8, 16} (one of values 0, 1, 2, 3, 4, 5, 6, and 8).
- searchSpaceType: represents whether a common search space (CSS) or a specific search space (USS) is used as well as the DCI format used for the corresponding SS type.

Then, the BS may generate and transmit a PDCCH to the UE (S506), and the UE may monitor a PDCCH candidate in one or more SSs to receive/detect the PDCCH (S508). An occasion for the UE to monitor a PDCCH candidate (e.g., time/frequency resources) is defined as a PDCCH (monitoring) occasion. One or more PDCCH (monitoring) occasions may be configured in one slot.

Table 13 shows the characteristics of each SS.

**[Table 13]**

| Type | Search space | RNTI | Use Case |
|---|---|---|---|
| Type0-PDCCH | Common | SI-RNTI on primary cell | SIB decoding |
| Type0A-PDCCH | Common | SI-RNTI on primary cell | SIB decoding |
| Type1-PDCCH | Common | RA-RNTI or TC-RNTI on primary cell | Msg2 and Msg4 decoding in RACH |
| Type2-PDCCH | Common | P-RNTI on primary cell | Paging decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE specific | C-RNTI, or MCS-C-RNTI, or CS-RNTI(s) | User-specific PDSCH decoding |

Table 14 shows DCI formats transmitted on a PDCCH.

**[Table 14]**

| DCI format | Utilization |
|---|---|
| 0_0 | PUSCH scheduling in one cell |
| 0_1 | PUSCH scheduling in one cell |
| 1_0 | PDSCH schedling in one cell |
| 1_1 | PDSCH schedling in one cell |
| 2_0 | Notify slot format to UE group |
| 2_1 | The UE notifies a UE group of PRB(s) and OFDM symbol(s) that the UE may assume not intend to transmit to the UE. |
| 2_2 | Transmit TPC commands for PUCCH and PUSCH |
| 2_3 | Transmit TPC command group for SRS transmission by one on more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. DCI format 2_0 may be used to forward dynamic slot format information (e.g., dynamic SFI) to a UE, and DCI format 2_1 may be used to forward downlink pre-Emption information to the UE. DCI format 2_0 and/or DCI format 2_1 may be forwarded to UEs within a corresponding group through a group common PDCCH, which is a PDCCH delivered to UEs defined as one group.

DCI format 0_0 and DCI format 1_0 are called fallback DCI formats, and DCI format 0_1 and DCI format 1_1 are called non-fallback DCI formats. In the fallback DCI format, the DCI size/field configuration remains the same regardless of the UE configuration. On the other hand, the DCI size/field configuration changes depending on the UE configuration in the non-fallback DCI format.

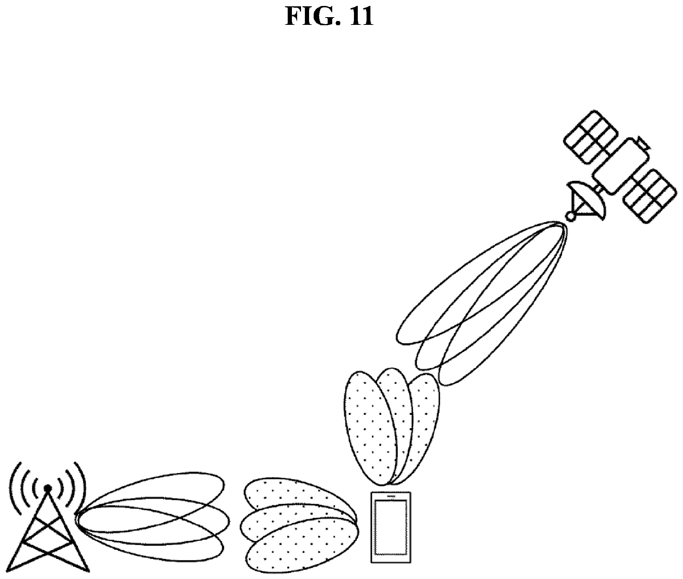

FIG. 11 illustrates a situation in which a terrestrial network (TN) and a non-terrestrial network (NTN) coexist.

Referring to FIG. 11, when a UE is served by a BS of a TN, a UE reception (RX) beam may be directed toward the ground, and when a UE is served by a BS of an NTN, the UE RX beam may be directed toward the sky. For a frequency band in which the NTN and the TN may coexist, the UE may perform an initial access with at least one of the NTN and the TN. For example, the UE may detect an SSB for a cell for the NTN in a frequency band and perform an initial access procedure with a cell for the NTN, and after the initial access procedure with the NTN, detect an SSB for a cell for the TN and perform an initial access procedure with the cell for the TN based on the detected SSB.

Hereinafter, assuming that the UE has completed an initial access procedure with at least one cell among a TN cell and an NTN cell based on the method described above, a method of switching a cell in which the UE performs signal transmission and reception from the TN cell to the NTN cell or from the NTN cell to the TN cell based on DCI received from either the TN cell or the NTN cell will be described in detail.

### NTN mode, TN mode, and default mode

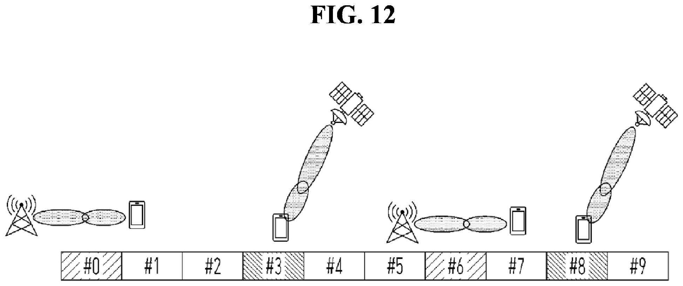

FIG. 12 is a diagram illustrating a method for a UE to receive data or a signal from a TN cell or an NTN cell.

The UE may be connected to the NTN and the TN through an initial access procedure based on detection of the SSB as described above. In this case, the UE may perform data transmission and reception with the TN cell to perform data transmission and reception at an improved speed, and may perform data transmission and reception with the NTN cell to ensure wide coverage. Alternatively, the UE may provide/support multiple services, such as eMBB/URLLC services, through data transmission and reception with the TN cell, and may receive multicast-related services through data transmission and reception with the NTN cell. Even if the UE is connected to both the NTN cell and the TN cell, the UE may transmit and receive data only for either the TN cell or the NTN.

In detail, referring to FIG. 12, the UE may transmit and receive data or signals from the TN cell from slot #0 (or subframe #0) to slot #2. The UE may transmit and receive data or signals from the NTN cell from slot #3 to slot #5, and may transmit and receive data or signals from the TN cell again in slot #6. The UE may transmit and receive data or signals from the NTN cell again in slot #8. As such, the UE may transmit and receive data from either the NTN cell or the TN cell while being connected to both the TN cell and the NTN cell.

The UE may support a TN mode for transmitting and receiving data/signals based on the TN cell and a NTN mode for transmitting and receiving data/signals based on the NTN cell. The UE may transmit and receive data/signals based on a default mode configured as default among the TN mode and the NTN mode. For example, a UE with the TN mode activated or a UE based on the TN mode may receive data/signals from the TN cell or transmit data/signals to the TN cell. Alternatively, the UE with the NTN mode activated or the UE based on the NTN mode may receive data/signals from the NTN cell or transmit data/signals to the NTN cell.

The UE may configure one of the TN mode and the NTN mode as a default mode. The UE may transmit and receive data/signals based on the default mode configured above, and may also perform switching to a non-default mode, which is one mode that is not configured as default among the TN mode and the NTN mode. First, a method of determining a default mode and a non-default mode among the TN mode and the NTN mode is described in detail.

The UE may be configured to configure or determine a default mode among the TN mode and the NTN mode according to at least one of the following methods: Alt1, Alt2, Alt3, and Alt4.

### (1) Alt1

The default mode is always configured to a TN mode, and the non-default mode may be configured to an NTN mode (Alt1-1). Alternatively, the UE may configure/determine one of the TN mode and the NTN mode as a default mode in an initial access procedure for the TN cell and the NTN cell (Alt1-2). For example, the UE may determine the default mode based on the quality of the SSB detected for each of the TN cell and the NTN cell. For example, when the quality of the SSB for the TN cell is higher than the quality of the SSB for the NTN cell, the UE may determine the TN mode as the default mode. Alternatively, the UE may determine the default mode based on the order in which the initial access procedure is performed. For example, when the UE performs an initial access procedure for the TN cell after performing the initial access procedure for the NTN cell, the default mode may be determined as the NTN mode.

### (2) Alt2

The UE may be instructed/configured to select a default mode among the TN mode and the NTN mode via RRC signaling. For example, the UE may receive configuration information for RRC parameters for the TN mode and the NTN mode, and may be explicitly instructed which of the TN mode and the NTN mode is the default mode through indication information separately included in the configuration information.

When the default mode is not configured through the RRC signaling, the UE may determine the default mode according to the Alt1 described above.

### (3) Alt3

The UE may directly determine a default mode among the TN mode and the NTN mode. For example, the UE may determine a preferred mode among the NTN mode and the TN mode as the default mode based on the quality of the TN cell and the quality of the NTN cell, or the type of service to be provided. In this case, the UE may report a default mode indicator indicating the determined default mode to the BS, and the BS may transmit a message for confirmation of the default mode according to the default mode indicator to the UE.

### (4) Alt4

The UE may be instructed to select one of the TN mode and the NTN mode as the default mode through DCI. That is, the UE may be dynamically instructed to the default mode through the DCI. For example, the UE may be instructed via DCI to select a default mode for a fallback operation.

Hereinafter, a method of dynamically switching the UE from the default mode to the non-default mode or from the non-default mode to the default mode based on the instruction information is described in detail.

### Dynamic mode switch between NTN and TN

As described above, the UE may be connected (RRC connected) to the TN cell and the NTN cell through an initial access procedure, or the like in a frequency band in which the NTN cell and the TN cell coexist, and may transmit and receive data/signals based on the TN mode or the NTN mode.

In detail, the UE may be configured with specific parameters (or RRC parameters) for the TN mode and specific parameters (or RRC parameters) for the NTN mode. Here, the specific parameters may include parameters for numerologies, slot structures (e.g., slot formats), TCI states, and the like, which are RRC parameters configured through RRC signaling.

The UE may transmit and receive data from the TN cell based on specific parameters for the TN cell in the TN mode. Alternatively, the UE may transmit and receive data from the NTN cell based on specific parameters for the NTN cell in the NTN mode. As described above, the UE may transmit and receive data/signals based on either the TN mode or the NTN mode, and may not simultaneously transmit and receive data/signals for both the TN mode and the NTN mode.

The UE may receive downlink control information (DCI) from one of the TN cell or the NTN cell. Here, the downlink control information may further include indication information (NTN/TN indicator (NTI)) that indicates switching between the TN mode and the NTN mode. The UE may switch from the TN mode to the NTN mode or perform switching from the NTN mode to the TN mode based on reception of the DCI including the NTI.

The UE may set/request a specific time gap T_{gap} for mode switching between the NTN mode and the TN mode. Here, the specific time gap T_{gap} may be configured based on a time for application or change of the specific parameters according to switching of the TN mode and the NTN mode, a time for change of the Tx/Rx beam corresponding to each mode (e.g., TN mode toward the ground, NTN mode toward the sky), a time for processing, and the like. The specific time gap T_{gap} may be configured differently depending on whether switching is from TN mode to NTN mode or from NTN mode to TN mode. For example, the specific time gap may include a first time gap T_{gap,1} configured for switching from the TN mode to the NTN mode and a second time gap T_{gap,2} configured for switching from the NTN mode to the TN mode. Here, the first time gap may have a different time than the second time gap. For example, the first time gap T_{gap,1} may be configured to a value greater than the second time gap T_{gap,2}.

The specific time gap T_{gap} may be configured in units of slots, symbols, or subframes. For example, the first time gap T_{gap,1} may be configured to n1 slots, and the second time gap T_{gap,2} may be configured to n2 slots.

Hereinafter, it is assumed that parameters are configured for each mode in the UE as described above and that the specific time gap T_{gap} is configured, and this is explained in detail.

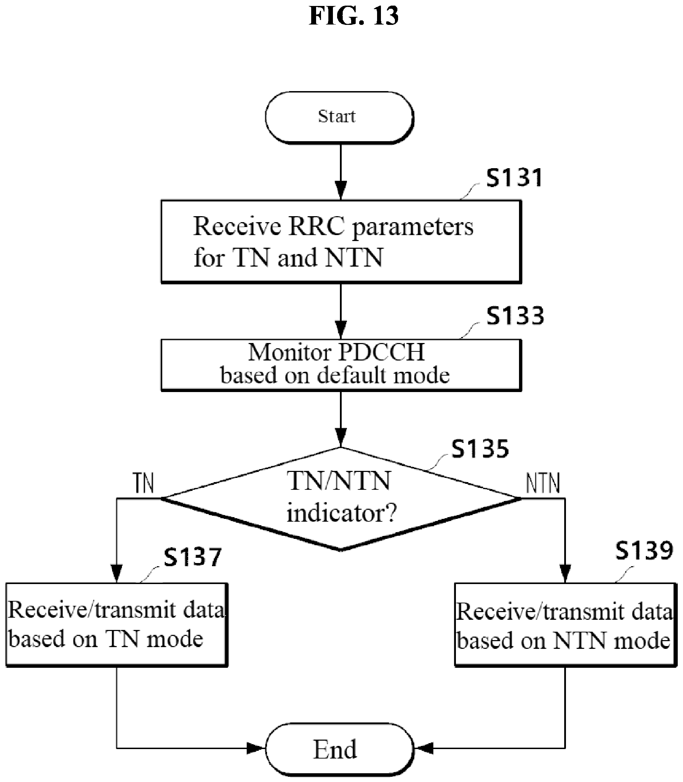

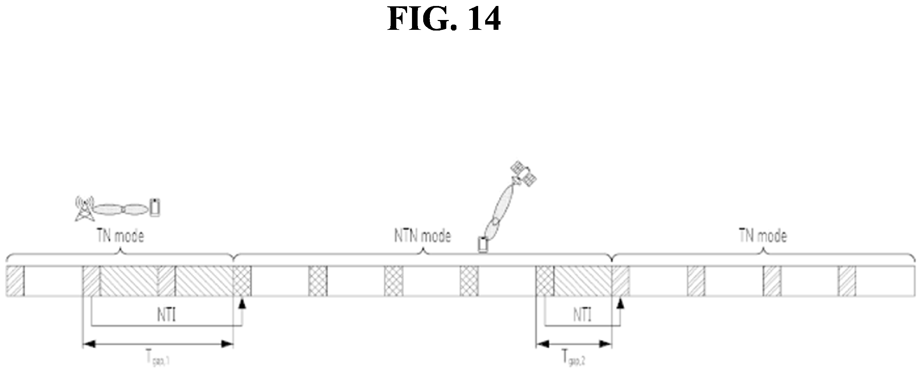

FIG. 13 and FIG. 14 are diagrams for explaining a method for a UE to switch modes based on received downlink control information.

As described above, the UE may configure one of the TN mode and the NTN mode as a default mode. Here, the default mode may be predefined as described above or indicated by RRC signaling, or the like. In this case, the UE may transmit and receive data/signals based on the default mode unless there is a separate instruction through instruction information such as the mode switching described above.

Referring to FIG. 13, the UE may receive configuration information including information on first RRC parameters for the TN and second RRC parameters for the NTN (S131). The UE may transmit and receive data/signals by using RRC parameters corresponding to the default mode among the first RRC parameters and the second RRC parameters. For example, when the default mode is configured to the TN mode based on the TN cell, the UE may transmit and receive data/signals based on the first RRC parameters. Alternatively, when the default mode is configured to the NTN mode based on the NTN cell, the UE may transmit and receive data/signals based on the second RRC parameters.

The UE may monitor the PDCCH based on the default mode (S133). For example, when the default mode is the TN mode, the UE may monitor whether the PDCCH is received from the TN cell.

Then, the UE may receive a PDCCH including an NTN/TN indicator (NTI) (S135). The UE may be instructed to activate a mode among the TN mode and the NTN mode through the NTI included in the PDCCH. For example, the UE may perform switching from the default mode to the non-default mode or switching from the non-default mode to the default mode based on the NTI.

The UE may transmit and receive signals/data based on the TN mode when the NTI indicates the TN mode (S137). Alternatively, the UE may transmit and receive signals/data based on the NTN mode when the NTI indicates the NTN mode (S139).

The UE may perform an operation of switching to a mode indicated by the NTI when the currently activated mode and the mode indicated by the NTI are different. In detail, when the UE performs mode switching according to the instructions of the NTI, the UE may change the RRC parameters corresponding to the mode to be switched. For example, the UE may change the first RRC parameters to the second RRC parameters when the activated mode is TN mode and the NTN mode is indicated by the NTI. Here, the first RRC parameters and the second RRC parameters may include at least one of the following parameters.
- Numerology (subcarrier spacing, cyclic prefix length)
- Beam related information (e.g., TCI state, QCL information, UL spatial related info etc.)
- Antenna related information (# of antennas, RF antenna chain, antenna module, etc.)
- Processing time capability
- UE bandwidth

Referring to FIG. 14, the UE may switch from the TN mode to the NTN mode based on reception of the DCI including the NTI, and then switch back to the TN mode from the NTN mode.

In detail, the UE may transmit and receive data/signals based on the TN mode configured as the default mode. The UE may receive a DCI including an NTI indicating the NTN mode based on the TN mode. In this case, the UE may perform an operation for switching from the TN mode to the NTN mode (e.g., reconfiguring the first RRC parameters to the second RRC parameters), and when the first time gap T_{gap,1} elapses, the UE may perform transmission and reception of data/signals based on the NTN mode. As illustrated in FIG. 14, the UE may transmit and receive data/signals based on the NTN mode after receiving the NTI and the first time gap has elapsed. In this case, even if a time resource for the TN mode is configured after receiving the NTI, the UE does not transmit or receive data/signal based on the TN mode during the first time gap T_{gap,1}. That is, the UE may expect that no data/signal may be transmitted or received during the first time gap T_{gap,1}.

Then, the UE may receive a DCI including an NTI indicating a TN mode during transmission/reception of data/signal based on the NTN mode. In this case, as illustrated in FIG. 14, the UE may perform switching to the TN mode based on reception of the NTI. Switching to the TN mode may be performed within the second time gap T_{gap,2} as illustrated in FIG. 14. The UE may transmit and receive data/signals based on the TN mode after receiving the NTI and a second time gap T_{gap,2} has elapsed. In this case, even if a time resource for the NTN mode is configured after receiving the NTI, the UE does not perform transmission/reception of data/signal based on the NTN mode during the second time gap T_{gap,2}. That is, the UE may expect that no data/signal may be transmitted or received during the second time gap T_{gap,2}.

Alternatively, the UE may transmit and receive signals/data based on a non-default mode rather than the default mode through instructions such as the NTI. In this case, the UE may receive an NTI indicating switching to the default mode, or fallback to the default mode based on expiration of a preset timer. For example, when the TN mode is configured as the default mode and switched to the NTN mode, which is a non-default mode, by NTI, the UE may transmit and receive data/signals based on the NTN mode until a preset timer expires, and when the preset timer expires, the UE may fall back to the TN mode, which is the default mode.

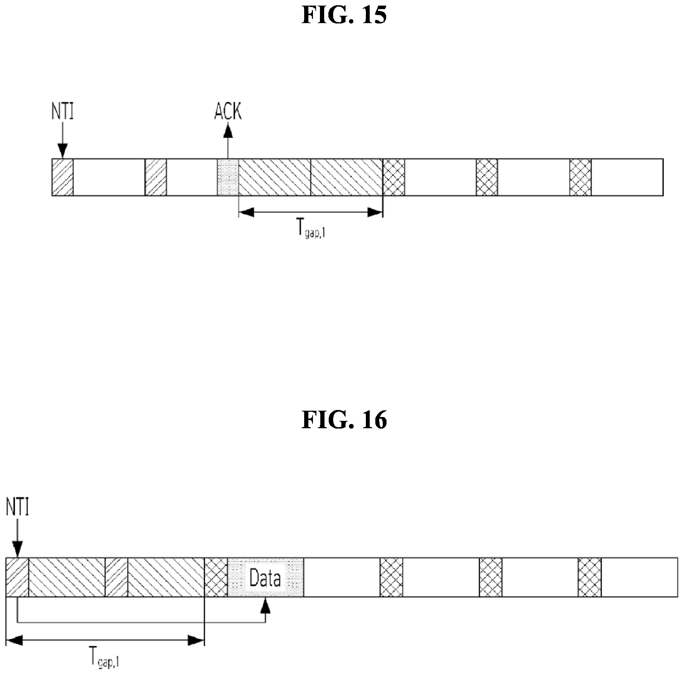

FIGS. 15 and 16 illustrate a method of performing mode switching based on the NTI included in DCI.

The UE may be instructed to the NTI via the DCI. The NTI may indicate either the TN mode or the NTN mode as described above. The UE may monitor the PDCCH for the DCI including the NTI based on the currently activated mode. The UE may be instructed to provide the NTI through at least one of Alt 1, Alt 2, or Alt3.

### (1) Alt1: based on non-scheduling DCI

The UE may be instructed to the NTI via DCI having a common/group-common DCI (GC-DCI) format. Here, the common/group common DCI format may not include scheduling information of a PDSCH or the like.

Referring to FIG. 15, the UE may receive the GC-DCI including the NTI. In this case, the UE may apply a time gap T_{gap} configured for mode switching by the NTI, taking into account the transmission timing of an acknowledgement (ACK) for reception of the GC-DI. For example, when the GC-DCI including the NTI indicating mode switching is received in slot n, the UE may transmit an ACK for the GC-DCI in slot n+K. In this case, the UE may apply the time gap based on the slot n+K, and transmit and receive signals/data based on the mode indicated by the NTI from slot n+K+T_{gap}.

### (2) Alt2: based on scheduling DCI

The UE may be instructed to the NTI via DCI in a DCI format that includes scheduling information for data/signal. For example, the UE may be implicitly/explicitly instructed with the NTI based on DCI scheduling a data channel such as a PDSCH. Alt2-1 describes a case in which the NTI is explicitly indicated through the DCI, and Alt2-2 and Alt 2-3 describe a case in which the NTI is implicitly indicated based on the RNTI, format, or the like of the DCI.

### 1) Alt 2-1

The UE may obtain a value of the NTI from the NTI field added to the DCI (Alt2-1). For example, the UE may obtain a value for the NTI based on the contents of the remaining fields of the DCI.

### 2) Alt 2-2

Alternatively, the UE may use different formats of DCI between the NTN mode and the TN mode (see FIG. 10 and Table 14), and may implicitly derive the indication for the NTI based on the format of the received DCI (Alt2-2). For example, the UE may assume that switching to a mode corresponding to the DCI format is instructed when a DCI of a format that does not correspond to the currently activated mode is received. For example, DCI format A may be used for the TN mode, and DCI format B may be used for the NTN mode. In this case, the UE may receive the DCI based on the currently activated TN mode, and may determine that switching to the NTN mode is (implicitly) indicated when the format of the received DCI is format B. In this case, the UE may predict that the data scheduled by the DCI format B may be transmitted based on the NTN mode rather than the TN mode, and may switch to the NTN mode (or activate the NTN mode) to receive the scheduled data.

### 3) Alt 2-3

Alternatively, the UE may use different RNTIs between the NTN mode and the TN mode, and may be (implicitly) instructed about the NTI based on the RNTI used to scramble the CRC of the received DCI (Alt2-3). For example, the DCI for the NTN mode may have a CRC scrambled with TN-RNTI, and the DCI for the TN mode may have a CRC scrambled with NTN-RNTI. In this case, when the UE with the TN mode activated receives a DCI having a CRC scrambled with NTN-RNTI, the UE may determine that switching from the TN mode to the NTN mode is implicitly indicated. That is, the UE may perform switching to the NTN mode upon reception of DCI having the CRC scrambled with the TN-RNTI, and receive data scheduled by the DCI based on the switched NRN mode.

### 4) Application of time gap

As described above, the UE, in which the TN mode is activated, may receive DCI (including scheduling information) that implicitly/explicitly indicates the NTI, and may apply a time gap for mode switching based on the reception time (or slot) of the DCI.

In detail, referring to FIG. 16, a UE with the TN mode activated may receive DCI implicitly/explicitly indicating the NTI in slot n. The UE may perform switching to the NTN mode based on the NTI confirmed by the DCI. In this case, the UE may apply a first time gap T_{gap1} based on a slot n in which the DCI is received. For example, the UE may receive data scheduled by the DCI based on the NTN mode in slot n + T_{gap1}.

### Fallback operation

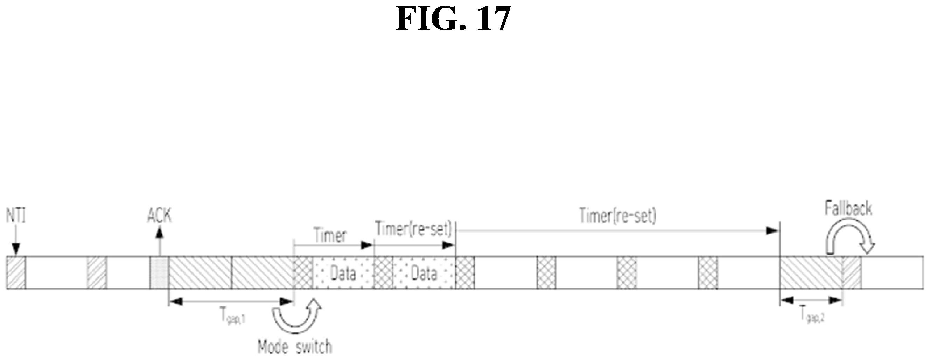

FIGS. 17 to 19 are diagrams for explaining a method of performing a fallback operation between a TN mode and an NTN mode by a UE.

As described above, the UE may perform the fallback operation to the default mode when transmitting or receiving data/signals based on a non-default mode other than a default mode. The fallback operation may be performed based on a preset timer (Alt 1), a mode activation time indicated via DCI (Alt 2), or an inactivity indicator (or mode termination indicator) indicated via DCI (Alt 3). The UE may be switched to the default mode by the fallback operation, or may be switched to the default mode by receiving an NTI indicating a switch to the default mode. Hereinafter, for convenience of explanation, it is assumed that the TN mode is configured as the default mode and NTN mode is configured as the non-default mode.

### (1) Alt 1

When operating in the non-default mode, the UE may determine whether to perform the fallback operation to the default mode based on a preset timer.

In detail, referring to FIG. 17, in the TN mode that is a default mode, the UE may receive an NTI indicating switching to the NTN mode. The UE may switch to the NTN mode when a first time gap T_{gap1} has elapsed from a slot in which an ACK for the NTI is transmitted. The UE may transmit and receive data/signals based on the NTN mode switched after the first time gap T_{gap1}. In this case, the preset timer may be operated from a slot in which the NTN mode is activated (i.e., a slot after the first time gap T_{gap1} has elapsed from a slot in which an ACK is transmitted). The preset timer may be reset or reinitialized when DIC scheduling data/signal in the NTN mode is received. For example, when the preset timer is a backoff counter that backs off for a first time, the preset timer operates from a slot after a first time gap T_{gap1} has elapsed from a slot in which an ACK is transmitted, and may expire when the first time has elapsed. When the UE receives DCI or the like for scheduling data based on the NTN mode before the preset timer expires, the preset timer may be reset or reinitialized to the first time. For example, when the preset timer is a counter that expires when a first time period elapses, the preset timer operates from a slot after the first time gap T_{gap1} elapses in a slot in which an ACK is transmitted, and may be reinitialized when the first time period elapses or by reception of a DCI that schedules data.

The UE may perform an operation of falling back from the non-default mode, the NTN mode, to the default mode, the TN mode, when the preset timer expires. For example, the UE may perform an operation of falling back to the TN mode within a second time gap T_{gap2} upon expiration of the preset timer. In other words, the UE may fall back/switch to the default mode, the TN mode, when the second time gap T_{gap2} elapses after the expiration of the preset timer.

As described with reference to FIG. 16, the first time gap T_{gap1} may be applied based on a slot in which the DCI including the NTI is received.

### (2) Alt 2

When operating in the above non-default mode, the UE may determine whether to perform a fallback operation to the default mode based on a mode activation time T_{act} indicated through DCI. In detail, the UE may receive DCI including an NTI indicating switching from a default mode (TN mode) to a non-default mode. The DCI may further include information about the mode activation time T_{act} in addition to the NTI. The UE may determine an activation time of the non-default mode indicated by the NTI based on the mode activation time T_{act}. The mode activation time T_{act} may be updated through reception of additional DCI.

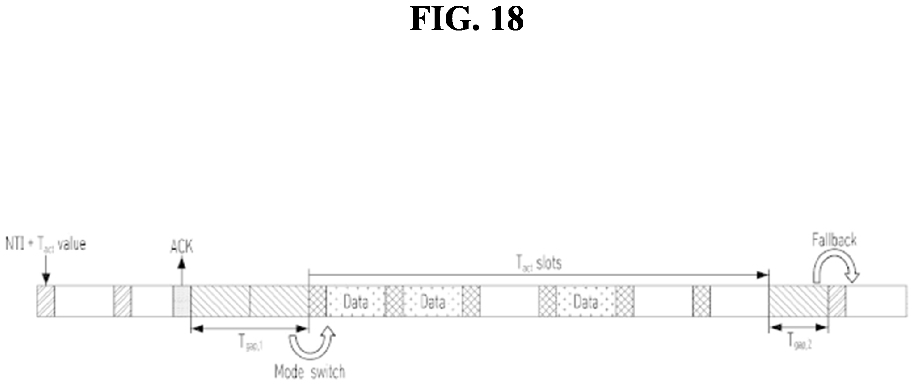

In detail, referring to FIG. 18, the UE may receive DCI including information about the NTI and the mode activation time based on a TN mode that is the default mode. The UE may switch to the NTN mode, which is a non-default mode indicated by the NTI, based on reception of the DCI. For example, the UE may switch to the NTN mode, which is a non-default mode indicated by the NTI, after a first time gap has elapsed from a slot in which the ACK for the DCI is transmitted (i.e., switching to the non-default mode is completed). The UE may activate the NTN mode during the mode activation time T_{act}. The UE may perform the fallback operation to switch back to the TN mode that is a default mode when the mode activation time T_{act} has elapsed. For example, the UE may fall back/switch to the NTN mode when a second time gap has elapsed after the mode activation time T_{act}.

As described with reference to FIG. 16, the first time gap T_{gap1} may be applied based on a slot in which the DCI including the NTI is received.

### (3) Alt 3

The UE may perform a fallback operation from the non-default mode to the default mode when a DCI or MAC CE including a deactivation indication or a mode termination indication is received while operating in the non-default mode. The UE may transmit and receive signals/data based on the non-default mode until the DCI or MAC CE including the inactivity indicator or mode termination indicator is received.

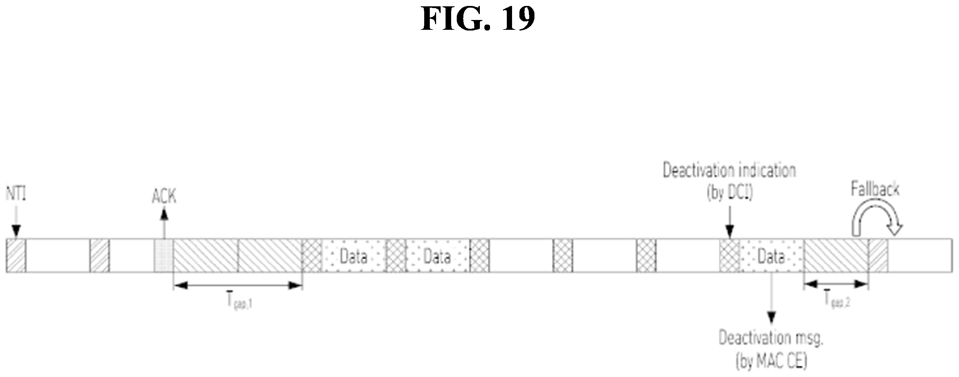

Referring to FIG. 19, the UE may receive the DCI including the NTI indicating switching to the NTN mode, which is a non-default mode, based on the TN mode, which is a default mode. The UE may switch to the NTN mode indicated by the NTI based on reception of the DCI. For example, the UE may switch to the NTN mode indicated by the NTI after a first time gap has elapsed from a slot in which an ACK for the DCI is transmitted. The UE may activate the NTN mode until the DCI including the deactivation indicator or mode termination indicator is received based on the NTN mode. The UE may perform a fallback operation to switch to the TN mode, which is a default mode, when DCI including the inactivity indicator or mode termination indicator is received based on the NTN mode. For example, the UE may fall back or switch to the TN mode after a second time gap has elapsed after the reception of the DCI or MAC CE including the inactivity indicator or mode termination indicator is completed.

As described with reference to FIG. 16, the first time gap T_{gap1} may be applied based on a slot in which the DCI including the NTI is received.

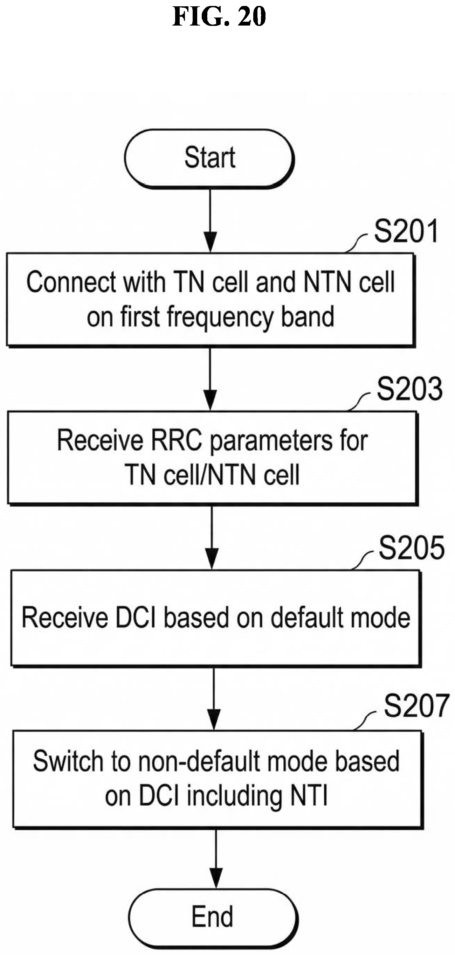

FIG. 20 is a diagram for explaining a method of receiving a downlink signal by a UE.

Referring to FIG. 20, the UE may perform connection with a terrestrial network (TN) cell and a non-terrestrial network (NTN) cell on a first frequency band (S201). For example, the UE may detect an SSB for each of the TN cell and the NTN cell, and perform an initial access procedure for the TN cell and an initial access procedure for the NTN cell based on the detected SSBs to be (RRC) connected to the TN cell and the NTN cell.

Then, the UE may receive first RRC parameters for the TN cell and second RRC parameters for the NTN cell through RRC signaling (S203). The UE may transmit and receive signals for the TN cell based on the first RRC parameters, and may transmit and receive signals/data for the NTN cell based on the second RRC parameters. As described above, the UE may transmit and receive signals for the TN cell based on the first RRC parameters in the TN mode, and may transmit and receive signals/data for the NTN cell based on the second RRC parameters in the NTN mode. The UE may activate only one of the TN mode and the NTN mode, and may transmit and receive the signal/data only for one of the modes. That is, the UE may not simultaneously transmit and receive signals/data based on the TN mode and the NTN mode.

Then, the UE may receive downlink control information (DCI) based on a default mode, which is one mode set as default among the TN mode and the NTN mode (S205). For example, the UE may have the TN mode configured to the default mode and the NTN mode configured to the non-default mode. As described above, the default mode may be indicated/configured through an initial access procedure or DCI, or may be directly determined/configured by the UE.

Then, the UE may switch the default mode to the non-default mode when the DCI includes an NTI instructing switching from the default mode to the non-default mode (S207). As described above, the UE may switch the default mode to the non-default mode at a time when a specific time gap is applied. For example, the UE may apply the specific time gap based on a slot in which the DCI is received when the DCI does not include data scheduling information. Alternatively, the UE may apply the specific time gap based on a slot in which an ACK for the DCI is transmitted when the DCI includes data scheduling information. Alternatively, the specific time gap may include a first time gap applied when switching from the TN mode to the NTN mode and a second time gap applied when switching from the NTN mode to the TN mode. Here, the first time gap may be configured to a different time from the second time gap, for example, the first time gap may be configured to a longer time than the second time gap.

Alternatively, the UE may be switched to the non-default mode based on the NTI included in the DCI. In this case, the UE may perform an operation of falling back to the default mode based on a preset timer, a mode activation time, or an inactivity indicator when DCI including an NTI instructing switching from the non-default mode to the default mode is not received. For example, the UE may activate the preset timer when the non-default mode is activated, and may switch/fall back to the default mode after the specific time gap has elapsed when the preset timer expires. Here, the preset timer may be reset/reinitialized based on reception of a DCI scheduling data/signal in the activated non-default mode. Alternatively, the UE may activate the non-default mode for the mode activation time when the DCI including the mode activation time together with the NTI is received (DCI received in the default mode). In this case, the UE may fall back from the non-default mode to the default mode when the mode activation time has elapsed. Here, the mode activation time may be updated by DCI received in the non-default mode. Alternatively, the UE may perform an operation of falling back the non-default mode to the default mode when the DCI received in the non-default mode includes an inactivity indicator.

As such, the proposed disclosure may dynamically direct switching between the NTN mode and the TN mode based on the NTI in a frequency band in which the NTN cell and the TN cell coexist. The proposed disclosure may effectively and easily instruct the UE to switch to a mode suitable for a type of service provided to the UE, a channel environment, and the like through the NTI. The proposed disclosure may enable the UE to efficiently perform the mode switching by newly defining a time gap for the mode switching, and may clearly predict the timing of the mode switching. The proposed disclosure may ensure effective fallback operation to the default mode by clearly specifying a time period during which the non-default mode of the UE is activated through a preset timer, a mode activation time, or an inactivity indicator.

In some implementations of the present disclosure, the UE or BS transmitting a signal/channel into a transmission beam may be expressed as transmitting the signal/channel into a spatial domain transmission filter. In some implementations of the present disclosure, the UE or BS receiving a signal/channel in a receive beam may be expressed as receiving the signal/channel using a spatial domain receive filter. For example, transmission using the same transmit beam may mean transmission using the same spatial domain transmit filter, and reception using the same receive beam may mean reception using the same spatial domain receive filter.

Here, the wireless communication technology implemented in wireless devices XXX and YYY of the present disclosure may include LTE, NR, and 6G as well as Narrowband Internet of Things for low-power communication. In this case, for example, NB-IoT technology may be an example of low power wide area network (LPWAN) technology, and may be implemented with standards such as LTE Cat NB1 and/or LTE Cat NB2, and is not limited to the names described above. Additionally or alternatively, the wireless communication technology implemented in the wireless devices XXX and YYY of the present disclosure may perform communication based on LTE-M technology. In this case, for example, LTE-M technology may be an example of LPWAN technology and may be called by various names such as enhanced machine type communication (eMTC). For example, LTE-M technology may be implemented by at least one of various standards, including but not limited to 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the names described above. Additionally or alternatively, the wireless communication technology implemented in the wireless devices XXX and YYY of the present disclosure may include at least one of ZigBee, Bluetooth, and low power wide area network (LPWAN) considering low-power communication, and is not limited to the names described above. For example, ZigBee technology may generate personal area networks (PANs) for small/low-power digital communications based on various standards such as IEEE 802.15.4, and may be called by various names.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by a subsequent amendment after the application is filed.

In the embodiments of the present disclosure, a description is made, centering on a data transmission and reception relationship between a BS and a UE. This transmission and reception relationship is equally/similarly extended to signal transmission and reception between UEs and relays or BSs and relays. In the present disclosure, a specific operation described as performed by the BS may be performed by an upper node of the BS. Namely, it is apparent that, in a network comprised of a plurality of network nodes including a BS, various operations performed for communication with a UE may be performed by the BS or network nodes other than the BS. The term 'BS' may be replaced with the term 'fixed station', 'Node B', 'evolved Node B (eNode B or eNB)', or 'access point'. The term 'terminal' may be replaced with the term 'UE', 'Mobile Station (MS)', 'Mobile Subscriber Station (MSS)', etc.

The embodiments of the present disclosure may be achieved by various means, for example, hardware, firmware, software, or a combination thereof. In a hardware configuration, an embodiment of the present disclosure may be achieved by one or more application specific integrated circuits (ASICs), digital signal processors (DSPs), digital signal processing devices (DSDPs), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

It will be apparent to those skilled in the art that the present disclosure may be embodied in other specific forms without departing from the characteristics of the present disclosure. Accordingly, the detailed description should not be construed as limiting in any respect and should be considered as illustrative. The scope of the present disclosure should be determined by a reasonable interpretation of the appended claims, and all changes within the equivalent scope of the present disclosure are included in the scope of the present disclosure.

### Industrial Applicability

The embodiments of the present disclosure as described above may be applied to various mobile communication systems.

## Claims

1. A method of receiving a downlink signal by a user equipment (UE) in a wireless communication system, the method comprising:
connecting with a terrestrial network (TN) cell and a non-terrestrial network (NTN) cell on a first frequency band;
receiving downlink control information (DCI) based on a default mode configured as a default among a TN mode in which transmission and reception of a signal based on the TN cell are performed and an NTN mode in which transmission and reception of a signal based on the NTN cell are performed; and
switching to a non-default mode that is not configured as a default among the NTN mode and the TN mode based on instruction information instructing switching of a mode in the DCI and receiving the signal based on the non-default mode.

2. The method of claim 1, wherein the default mode is configured to the TN mode and the non-default mode is configured to the NTN mode.

3. The method of claim 1, wherein reception of the signal based on the non-default mode is performed after a specific time gap from a first slot in which a message including an acknowledgement (ACK) for the DCI is transmitted or a second slot in which the DCI is received.

4. The method of claim 3, wherein the reception of the signal based on the non-default mode is performed after the specific time gap from the first slot based on the DCI not including data scheduling information.

5. The method of claim 3, wherein the reception of the signal based on the non-default mode is performed after the specific time gap from the second slot based on the DCI including data scheduling information.

6. The method of claim 3, wherein the specific gap includes a first time gap applied when switching from the TN mode to the NTN mode and a second time gap applied when switching from the NTN mode to the TN mode.

7. The method of claim 1, wherein the non-default mode is activated until expiration of a preset timer, and the UE falls back to the default mode based on the expiration of the preset timer.

8. The method of claim 7, wherein the preset timer is reset or initialized based on reception of DCI including data scheduling information in the non-default mode.

9. The method of claim 1, wherein the non-default mode is activated during a mode activation time included in the DCI, and the UE falls back to the default mode when the mode activation time elapses.

10. The method of claim 1, wherein the UE falls back to the default mode based on reception of the DCI including an inactivity indicator or a mode termination indicator in the non-default mode.

11. A computer-readable recording medium recording a program for performing the method of claim 1.

12. A user equipment (UE) for receiving a downlink signal in a wireless communication system, the UE comprising:
at least one transceiver;
at least one processor; and
at least one computer memory operably connectable to the at least one processor and storing instructions that, when executed, cause the at least one processor to perform operations,
wherein the operations include connecting with a terrestrial network (TN) cell and a non-terrestrial network (NTN) cell on a first frequency band, receiving downlink control information (DCI) based on a default mode configured as a default among a TN mode in which transmission and reception of a signal based on the TN cell are performed and an NTN mode in which transmission and reception of a signal based on the NTN cell are performed, and switching to a non-default mode that is not configured as a default among the NTN mode and the TN mode based on instruction information instructing switching of a mode in the DCI and receiving the signal based on the non-default mode.

13. The UE of claim 12, wherein the default mode is configured to the TN mode and the non-default mode is configured to the NTN mode.

14. The UE of claim 12, wherein reception of the signal based on the non-default mode is performed after a specific time gap from a first slot in which a message including an acknowledgement (ACK) for the DCI is transmitted or a second slot in which the DCI is received.

15. The UE of claim 14, wherein the reception of the signal based on the non-default mode is performed after the specific time gap from the first slot based on the DCI not including data scheduling information.

16. The UE of claim 14, wherein the reception of the signal based on the non-default mode is performed after the specific time gap from the second slot based on the DCI including data scheduling information.

17. The UE of claim 14, wherein the specific gap includes a first time gap applied when switching from the TN mode to the NTN mode and a second time gap applied when switching from the NTN mode to the TN mode.

18. A processing device for receiving a downlink signal in a wireless communication system, the processing device comprising:
at least one processor; and
at least one computer memory operably connectable to the at least one processor and storing instructions that, when executed, cause the at least one processor to perform operations,
wherein the operations include connecting with a terrestrial network (TN) cell and a non-terrestrial network (NTN) cell on a first frequency band, receiving downlink control information (DCI) based on a default mode configured as a default among a TN mode in which transmission and reception of a signal based on the TN cell are performed and an NTN mode in which transmission and reception of a signal based on the NTN cell are performed, and switching to a non-default mode that is not configured as a default among the NTN mode and the TN mode based on instruction information instructing switching of a mode in the DCI and receiving the signal based on the non-default mode.

19. A method of transmitting a downlink signal to a user equipment (UE) connected to a terrestrial network (TN) cell and a non-terrestrial network (NTN) cell on a first frequency band by a base station (BS) in a wireless communication system, the method comprising:
instructing the UE to select one mode as a default mode among a TN mode in which transmission and reception of a signal based on the TN cell are performed and an NTN mode in which transmission and reception of a signal based on the NTN cell are performed; and
transmitting downlink control information (DCI) including instruction information indicating switching from the default mode to a non-default mode that is not configured as a default among the NTN mode and the TN mode.

20. A base station (BS) for transmitting a downlink signal in a wireless communication system, the BS comprising:
at least one transceiver;
at least one processor; and
at least one computer memory operably connectable to the at least one processor and storing instructions that, when executed, cause the at least one processor to perform operations,
wherein the operations include instructing a user equipment (UE) connected to a terrestrial network (TN) cell and a non-terrestrial network (NTN) cell on a first frequency band to select one mode as a default mode among a TN mode in which transmission and reception of a signal based on the TN cell are performed and an NTN mode in which transmission and reception of a signal based on the NTN cell are performed, and transmitting downlink control information (DCI) including instruction information indicating switching from the default mode to a non-default mode that is not configured as a default among the NTN mode and the TN mode.
